(19) Europäisches Patentamt
European Patent Office
Office européen des brevets

(11) EP 4 227 739 A1

(12) **EUROPEAN PATENT APPLICATION**

(43) Date of publication:
**16.08.2023 Bulletin 2023/33**

(21) Application number: **23154688.8**

(22) Date of filing: **02.02.2023**

(51) International Patent Classification (IPC):
***G03G 5/05*** *(2006.01)* ***G03G 5/06*** *(2006.01)*
***G03G 5/147*** *(2006.01)*

(52) Cooperative Patent Classification (CPC):
**G03G 5/0592; G03G 5/0539; G03G 5/0542; G03G 5/0546; G03G 5/0564; G03G 5/0596; G03G 5/061443; G03G 5/06147; G03G 5/061473; G03G 5/14708; G03G 5/14726; G03G 5/1473; G03G 5/14734**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022 JP 2022020581**

(71) Applicant: **CANON KABUSHIKI KAISHA**
**Tokyo 146-8501 (JP)**

(72) Inventors:
- **OHIRA, Jun**
**Tokyo, 146-8501 (JP)**
- **SHIRASUNA, Toshiyasu**
**Tokyo, 146-8501 (JP)**
- **KUROIWA, Ikuyo**
**Tokyo, 146-8501 (JP)**
- **SHIMADA, Tsuyoshi**
**Tokyo, 146-8501 (JP)**
- **UENO, Takanori**
**Tokyo, 146-8501 (JP)**
- **IKARI, Kenichi**
**Tokyo, 146-8501 (JP)**
- **MITSUDA, Haruhiko**
**Tokyo, 146-8501 (JP)**
- **TOKIMITSU, Ryoichi**
**Tokyo, 146-8501 (JP)**
- **TAKEUCHI, Eileen**
**Tokyo, 146-8501 (JP)**

(74) Representative: **TBK**
**Bavariaring 4-6**
**80336 München (DE)**

(54) **ELECTROPHOTOGRAPHIC PHOTOSENSITIVE MEMBER, ELECTROPHOTOGRAPHIC APPARATUS, PROCESS CARTRIDGE, AND METHOD FOR PRODUCING ELECTROPHOTOGRAPHIC PHOTOSENSITIVE MEMBER**

(57) The present disclosure provides an electrophotographic photosensitive member having a surface layer that is excellent in dispersibility of a fluorine atom-containing resin particle and suppresses a potential fluctuation at the time of repeated use. The electrophotographic photosensitive member having the surface layer, wherein the surface layer includes the fluorine atom-containing resin particle, a binder material, and a polymer A having a specific structural unit.

FIG. 1

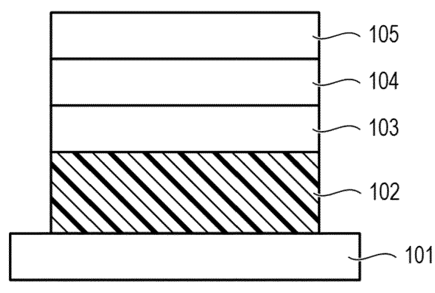


EP 4 227 739 A1

## Description

BACKGROUND OF THE INVENTION

Field of the Invention

The present disclosure relates to an electrophotographic photosensitive member, a process cartridge and an electrophotographic apparatus each having the electrophotographic photosensitive member, and a method for producing the electrophotographic photosensitive member.

Description of the Related Art

As an electrophotographic photosensitive member to be mounted in an electrophotographic apparatus, an electrophotographic photosensitive member containing an organic photoconductive substance (charge generation substance) is widely used. In recent years, for the purpose of extending the life of the electrophotographic photosensitive member and enhancing an image quality at the time of repeated use, the electrophotographic photosensitive member is required to have enhanced mechanical durability (abrasion resistance).

As a technology for enhancing the abrasion resistance of the electrophotographic photosensitive member, there is a method of causing a surface layer of the electrophotographic photosensitive member to contain a fluorine atom-containing resin particle, and reducing the friction between the surface layer and a contact member such as a cleaning blade. Japanese Patent Application Laid-Open No. H06-332219 discloses a technology of forming a surface layer, by using a dispersion liquid of the fluorine atom-containing resin particle such as a polytetrafluoroethylene resin particle, as a coating liquid for the surface layer.

In addition, there is known a method of using a (meth)acrylic polymer containing a fluorine atom as a dispersing agent for the fluorine atom-containing resin particle, for the purpose of enhancing dispersibility, when the dispersion liquid of the fluorine atom-containing resin particle is prepared. Japanese Patent Application Laid-Open No. 2009-104145 discloses a technology of enhancing the dispersibility of the fluorine atom-containing resin particle, with the use of a fluorine atom-containing (meth)acrylic polymer having a specific structure as a dispersing agent.

Japanese Patent Application Laid-Open No. 2012-203253 discloses a technology of causing the surface layer to contain a crosslinked product of a guanamine compound or a melamine compound and a charge transporting material, in order to enhance the abrasion resistance of the surface layer of the electrophotographic photosensitive member.

Japanese Patent Application Laid-Open No. 2021-47236 discloses an electrophotographic photosensitive member that has an outermost surface layer which contains a fluorine-based graft polymer and a fluorine atom-containing resin particle, wherein the fluorine-based graft polymer contains a structural unit having an acidic group having a pKa of 3 or smaller.

SUMMARY OF THE INVENTION

As a result of investigation by the present inventors, it has been found that the technologies which are disclosed in Japanese Patent Application Laid-Open No. 2009-104145 and Japanese Patent Application Laid-Open No. 2012-203253 have a room for further improvement in a point that the potential fluctuation at the time of repeated use can be suppressed without impairing the dispersibility of the fluorine atom-containing resin particle.

At least one aspect of the present disclosure is directed to providing an electrophotographic photosensitive member which suppresses image defects due to insufficient dispersion of the fluorine atom-containing resin particle and suppresses the potential fluctuation at the time of repeated use in a high-temperature and high-humidity environment.

In addition, another aspect of the present disclosure is directed to providing a process cartridge which mounts the electrophotographic photosensitive member thereon, and an electrophotographic apparatus equipped with the process cartridge.

Furthermore, another aspect of the present disclosure is directed to providing a method for producing the electrophotographic photosensitive member.

According to one aspect of the present disclosure, provided is an electrophotographic photosensitive member having a surface layer, wherein the surface layer includes a fluorine atom-containing resin particle, a binder material, and a polymer A having a structural unit represented by the following formula (1), and the sum of the number of carbon atoms of $Rf^1$ and $Rf^2$ in the formula (1) is 6 or more:

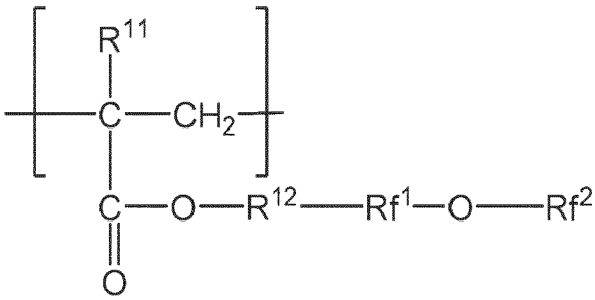

(1)

, wherein $R^{11}$ represents a hydrogen atom or a methyl group, $R^{12}$ represents any of a single bond, a methylene group and an ethylene group, $Rf^1$ represents a perfluoroalkylene group having 1 to 5 carbon atoms or a perfluoroalkylidene group having 1 to 5 carbon atoms, and $Rf^2$ represents a perfluoroalkyl group having 1 to 5 carbon atoms.

In addition, according to another aspect of the present disclosure, in an electrophotographic photosensitive member having a surface layer, the surface layer contains a fluorine atom-containing resin particle, a binder material, and a polymer A having a structural unit represented by the formula (1), wherein the polymer A does is free of a structural unit having an acidic group having a pKa of 3 or smaller.

Furthermore, according to another aspect of the present disclosure, provided is a process cartridge that integrally supports the electrophotographic photosensitive member, and at least one unit selected from the group consisting of a charging unit, a developing unit, a transfer unit, a static elimination unit and a cleaning unit, and that is detachably attachable to the main body of the electrophotographic apparatus.

In addition, according to another aspect of the present disclosure, provided is an electrophotographic apparatus including the electrophotographic photosensitive member, and a charging unit, an exposure unit, a developing unit and a transfer unit.

Furthermore, according to another aspect of the present disclosure, provided is a method for producing the electrophotographic photosensitive member.

Further features of the present invention will become apparent from the following description of exemplary embodiments with reference to the attached drawings.

BRIEF DESCRIPTION OF THE DRAWINGS

FIG. 1 is a schematic view illustrating one example of a configuration of an electrophotographic photosensitive member of the present disclosure.

FIG. 2 is a view illustrating one example of a polishing machine using a polishing sheet.

FIG. 3 is a schematic view illustrating one example of a process cartridge having the electrophotographic photosensitive member of the present disclosure.

FIG. 4 is a schematic view illustrating one example of an electrophotographic apparatus having the electrophotographic photosensitive member of the present disclosure.

DESCRIPTION OF THE EMBODIMENTS

Preferred embodiments of the present invention will now be described in detail in accordance with the accompanying drawings.

The present disclosure will be described below in detail with reference to exemplary embodiments.

As a result of investigation by the present inventors, it has been found that when a surface layer of an electrophotographic photosensitive member contains a fluorine atom-containing resin particle, a binder material, and a polymer A having a structural unit represented by the following formula (1), in which a sum of the number of carbon atoms of $Rf^1$ and $Rf^2$ is set to 6 or more, the electrophotographic photosensitive member can be obtained which is excellent in the dispersibility of the fluorine atom-containing resin particle in the surface layer, and suppresses the potential fluctuation at the time of repeated use in a high-temperature and high-humidity environment:

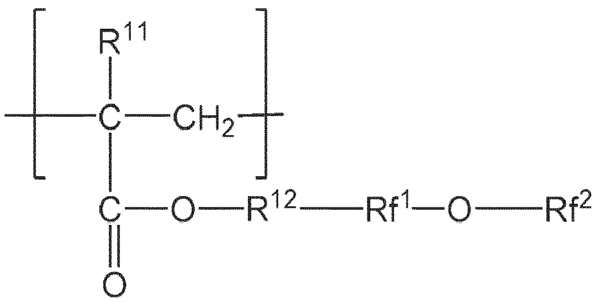

(1)

, wherein $R^{11}$ represents a hydrogen atom or a methyl group, $R^{12}$ represents any of a single bond, a methylene group and an ethylene group, $Rf^1$ represents a perfluoroalkylene group having 1 to 5 carbon atoms or a perfluoroalkylidene group having 1 to 5 carbon atoms, and $Rf^2$ represents a perfluoroalkyl group having 1 to 5 carbon atoms.

The polymer A may be free of a structural unit having an acidic group having a pKa of 3 or smaller, but preferably does not have the structural unit.

The surface layer may be free of a polymer having a structural unit represented by the formula (1) and a structural unit having an acidic group having a pKa of 3 or smaller, but preferably is free of the polymer.

The pKa of the acidic group is determined by measurement using a known method such as titration. Examples of the acidic group having a pKa of 3 or smaller include a sulfonic acid group (methanesulfonic acid: pKa -2.6), a phosphonic acid group (first dissociation: pKa 1.5), a phosphate group (first dissociation: pKa 2.12), and a fluoroalkyl carboxylic acid group (for example, trifluoroacetic acid: pKa -0.25, difluoroacetic acid: pKa 1.24, and monofluoroacetic acid: pKa 2.66).

Here, the present inventors think that the polymer A having the structural unit represented by the formula (1) acts as a dispersing agent for the fluorine atom-containing resin particle, in a process of preparing a coating liquid for the surface layer, for forming the surface layer of the electrophotographic photosensitive member.

The present inventors assume the reason why the electrophotographic photosensitive member of the present disclosure is excellent in the dispersibility of the fluorine atom-containing resin particle in the surface layer, and is excellent in an effect of suppressing the potential fluctuation at the time of repeated use in a high-temperature and high-humidity environment, in the following way.

An electrophotographic photosensitive member having a surface layer containing a fluorine atom-containing resin particle and a dispersing agent tends to show a large potential fluctuation at the time of repeated use, and particularly under a high-temperature and high-humidity environment, tends to show a large potential fluctuation at the time of repeated use. This is considered to be because an electric charge tends to easily accumulate in a $-(CF_2)_n-$ chain contained in the dispersing agent which adheres to the fluorine atom-containing resin particle contained in the surface layer.

As a result of investigation by the present inventors, it has been found that when a polymer having a structural unit containing a $-(CF_2)_n-$ chain is included in a surface layer, the presence of an oxygen atom between the $-(CF_2)_n-$ chain and the $-(CF_2)_n-$chain is effective in suppressing charge trapping. However, as the number of carbon atoms in the $-(CF_2)_n-$ chain increases, an electric charge tends to easily accumulate, and there is a case where the effect of suppressing the potential fluctuation cannot be sufficiently obtained.

As a result of further investigation by the present inventors, it has been found that the charge trapping is suppressed by causing the surface layer to contain the polymer A having the structural unit represented by the formula (1), and an electrophotographic photosensitive member can be obtained which suppresses the potential fluctuation at the time of repeated use even under a high- temperature and high-humidity environment.

It is considered that the accumulation of electric charges in the structural unit represented by the formula (1) can be suppressed, by setting $Rf^1$ and $Rf^2$ in the formula (1) to a perfluoroalkylene group having 1 to 5 carbon atoms or a perfluoroalkylidene group having 1 to 5 carbon atoms. In addition, it is considered that a difference in the surface energy between the structural unit represented by the formula (1) and the fluorine atom-containing resin particle becomes small, by setting $R^{12}$ in the formula (1) to a single bond, a methylene group or an ethylene group, and easy adhesion to the fluorine atom-containing resin particle is achieved.

<Fluorine atom-containing resin particle>

The surface layer of the electrophotographic photosensitive member of the present disclosure contains a fluorine atom-containing resin particle.

When the photosensitive layer of the electrophotographic photosensitive member is a multilayer type photosensitive layer and a protective layer is the surface layer, the content of the fluorine atom-containing resin particle with respect to the protective layer is 5% by mass or more and 40% by mass or less.

Examples of the resin contained in the fluorine atom-containing resin particle to be used in the present disclosure include the following resins: polytetrafluoroethylene resin, polychlorotrifluoroethylene resin, polytetrafluoroethylene propylene resin, polyvinyl fluoride resin, polyvinylidene fluoride resin or polydichlorodifluoroethylene resin. It is also preferable to use a particle containing a plurality of the above resins. In the above description, it is more preferable from the viewpoint of the enhancement of dispersibility that the fluorine atom-containing resin particle is the polytetrafluoroethylene resin.
In the cross-sectional observation of the surface layer, it is preferable that an arithmetic average (average size of primary particles) of long diameters of the primary particles in the fluorine atom-containing resin particles is 150 nm or larger and 300 nm or smaller, which are measured on the basis of a secondary electron image obtained by a scanning electron microscope, from the viewpoint of the enhancement of the dispersibility and the suppression of the potential fluctuation. Furthermore, it is preferable that an average size of primary particles of the fluorine atom-containing resin particles is 180 nm or larger and 250 nm or smaller.
It is preferable that an average value (average circularity) of circularities of the fluorine atom-containing resin particles is 0.75 or larger, which are calculated from the areas and circumferential lengths of the primary particles, which are measured on the basis of a secondary electron image obtained by a scanning electron microscope.
In order to control the measured values of the average size of primary particles and average circularity of the fluorine atom-containing resin particles contained in the surface layer of the electrophotographic photosensitive member of the present disclosure within the above range, such fluorine atom-containing resin particles can be used that the values of the average size of primary particles and average circularity fall within the above range, which are measured and calculated by the following method.

(Method for measuring average size of primary particles and average circularity)

Specifically, in the Examples of the present disclosure, the average particle size and average circularity of the fluorine atom-containing resin particles contained in the surface layer of the electrophotographic photosensitive member were measured with the use of a field emission scanning electron microscope (FE-SEM), in the following way. The fluorine atom-containing resin particles were attached to a commercially available carbon electroconductive tape, the fluorine atom-containing resin particles which do not attach to the electroconductive tape were removed by compressed air, and platinum vapor deposition was performed. The deposited fluorine atom-containing resin particle was observed with the use of FE-SEM (S-4700) manufactured by Hitachi High-Tech Corporation. For information, the measurement conditions of FE-SEM are as follows.

Acceleration voltage: 2 kV
WD: 5 mm
Magnification: 20000 times
Number of pixels: 1280 pixels in height and 960 pixels in width (size per pixel: 5 nm)

From the obtained image, the Feret diameters of 100 particles were determined with the use of Image J (open-source software produced by National Institutes of Health (NIH)), and the average value was calculated and determined to be the average particle size.
In addition, the area and the circumferential length were determined in the same way; and the circularity was determined from the following expression (II), and the average value was calculated and determined to be the average circularity.

$$\text{Circularity} = 4 \times \pi \times (\text{area})/(\text{square of circumferential length}) \quad \text{expression (II)}$$

The fluorine atom-containing resin particles of the present disclosure may be used alone, or also in combination of two or more types thereof.

<Polymer A having structural unit represented by formula (1)>

The surface layer of the electrophotographic photosensitive member of the present disclosure contains the polymer A having a structural unit represented by the following formula (1).

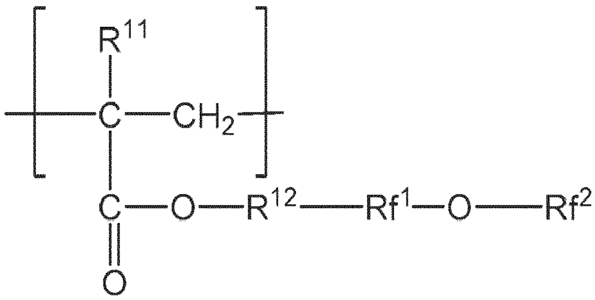

(1)

In the formula (1), $R^{11}$ represents a hydrogen atom or a methyl group. $R^{12}$ represents a single bond, a methylene group or an ethylene group. $Rf^1$ represents a perfluoroalkylene group having 1 to 5 carbon atoms or a perfluoroalkylidene group having 1 to 5 carbon atoms. $Rf^2$ represents a perfluoroalkyl group having 1 to 5 carbon atoms.

In the formula (1), $R^{11}$ is a hydrogen atom or a methyl group, and $R^{12}$ is a single bond, a methylene group or an ethylene group. When $R^{12}$ is an alkylene having 3 or more carbon atoms, the difference in surface energy between the structural unit represented by the formula (1) and the fluorine atom-containing resin particle becomes large; accordingly, it becomes difficult for the polymer A to sufficiently adhere to the fluorine atom-containing resin particle, and the dispersibility tends to become insufficient. In the formula (1), $Rf^1$ represents a perfluoroalkylene group having 1 to 5 carbon atoms or a perfluoroalkylidene group having 1 to 5 carbon atoms, and $Rf^2$ represents a perfluoroalkyl group having 1 to 5 carbon atoms. When $Rf^1$ and $Rf^2$ each have 6 or more carbon atoms, the accumulation of electric charges in the structural unit represented by the formula (1) cannot be suppressed sufficiently, and the potential fluctuation cannot be suppressed sufficiently when the electrophotographic photosensitive member is repeatedly used.

In addition, it is preferable that in the formula (1), the sum of the number of carbon atoms of $Rf^1$ and $Rf^2$ is 6 or larger and 9 or smaller, from the viewpoint of the enhancement of the dispersibility of the fluorine atom-containing resin particles. Furthermore, it is more preferable that the sum of the number of carbon atoms of $Rf^1$ and $Rf^2$ is 6 or larger and 8 or smaller, from the viewpoint of the suppression of the potential fluctuation.

Examples of the structural unit represented by the formula (1), which is contained in the polymer A that is used in the present disclosure and has the structural unit represented by the formula (1), include structures shown in the following Table 1.

[Table 1]

Table 1

| Number of example compound | Unit structure represented by formula (1) | | | | |
|---|---|---|---|---|---|
| | $R^{11}$ | $R^{12}$ | $Rf^1$ | $Rf^2$ | Sum of the number of carbon atoms of $Rf^1$ and $Rf^2$ |
| (1−1) | $-H$ | Single bond | $-CF_2-CF_2-$ | $-CF_2-CF_2-CF_2-CF_3$ | 6 |
| (1−2) | $-CH_3$ | Single bond | $-CF_2-CF_2-$ | $-CF_2-CF_2-CF_2-CF_3$ | 6 |
| (1−3) | $-H$ | $-CH_2-$ | $-CF_2-CF_2-$ | $-CF_2-CF_2-CF_2-CF_3$ | 6 |
| (1−4) | $-CH_3$ | $-CH_2-$ | $-CF_2-CF_2-$ | $-CF_2-CF_2-CF_2-CF_3$ | 6 |
| (1−5) | $-H$ | $-CH_2-CH_2-$ | $-CF_2-CF_2-$ | $-CF_2-CF_2-CF_2-CF_3$ | 6 |
| (1−6) | $-CH_3$ | $-CH_2-CH_2-$ | $-CF_2-CF_2-$ | $-CF_2-CF_2-CF_2-CF_3$ | 6 |
| (1−7) | $-H$ | Single bond | $-CF-$<br>$CF_3$ | $-CF_2-CF_2-CF_2-CF_2-CF_3$ | 7 |
| (1−8) | $-CH_3$ | Single bond | $-CF-$<br>$CF_3$ | $-CF_2-CF_2-CF_2-CF_2-CF_3$ | 7 |
| (1−9) | $-H$ | $-CH_2-$ | $-CF-$<br>$CF_3$ | $-CF_2-CF_2-CF_2-CF_2-CF_3$ | 7 |
| (1−10) | $-CH_3$ | $-CH_2-$ | $-CF-$<br>$CF_3$ | $-CF_2-CF_2-CF_2-CF_2-CF_3$ | 7 |
| (1−11) | $-H$ | $-CH_2-CH_2-$ | $-CF-$<br>$CF_3$ | $-CF_2-CF_2-CF_2-CF_2-CF_3$ | 7 |
| (1−12) | $-CH_3$ | $-CH_2-CH_2-$ | $-CF-$<br>$CF_3$ | $-CF_2-CF_2-CF_2-CF_2-CF_3$ | 7 |
| (1−13) | $-H$ | Single bond | $-CF_2-CF-$<br>$CF_3$ | $-CF_2-CF_2-CF_2-CF_2-CF_3$ | 8 |
| (1−14) | $-CH_3$ | Single bond | $-CF_2-CF-$<br>$CF_3$ | $-CF_2-CF_2-CF_2-CF_2-CF_3$ | 8 |
| (1−15) | $-H$ | $-CH_2-$ | $-CF_2-CF-$<br>$CF_3$ | $-CF_2-CF_2-CF_2-CF_2-CF_3$ | 8 |
| (1−16) | $-CH_3$ | $-CH_2-$ | $-CF_2-CF-$<br>$CF_3$ | $-CF_2-CF_2-CF_2-CF_2-CF_3$ | 8 |
| (1−17) | $-H$ | $-CH_2-CH_2-$ | $-CF_2-CF-$<br>$CF_3$ | $-CF_2-CF_2-CF_2-CF_2-CF_3$ | 8 |
| (1−18) | $-CH_3$ | $-CH_2-CH_2-$ | $-CF_2-CF-$<br>$CF_3$ | $-CF_2-CF_2-CF_2-CF_2-CF_3$ | 8 |
| (1−19) | $-H$ | Single bond | $-CF_2-CF_2-CF_2-CF_2-$ | $-CF_2-CF_2-CF_2-CF_3$ | 8 |
| (1−20) | $-CH_3$ | Single bond | $-CF_2-CF_2-CF_2-CF_2-$ | $-CF_2-CF_2-CF_2-CF_3$ | 8 |
| (1−21) | $-H$ | $-CH_2-$ | $-CF_2-CF_2-CF_2-CF_2-$ | $-CF_2-CF_2-CF_2-CF_3$ | 8 |
| (1−22) | $-CH_3$ | $-CH_2-$ | $-CF_2-CF_2-CF_2-CF_2-$ | $-CF_2-CF_2-CF_2-CF_3$ | 8 |
| (1−23) | $-H$ | $-CH_2-CH_2-$ | $-CF_2-CF_2-CF_2-CF_2-$ | $-CF_2-CF_2-CF_2-CF_3$ | 8 |
| (1−24) | $-CH_3$ | $-CH_2-CH_2-$ | $-CF_2-CF_2-CF_2-CF_2-$ | $-CF_2-CF_2-CF_2-CF_3$ | 8 |
| (1−25) | $-H$ | Single bond | $-CF-CF-$<br>$CF_3$ $CF_3$ | $-CF_2-CF_2-CF_2-CF_2-CF_3$ | 9 |
| (1−26) | $-CH_3$ | Single bond | $-CF-CF-$<br>$CF_3$ $CF_3$ | $-CF_2-CF_2-CF_2-CF_2-CF_3$ | 9 |
| (1−27) | $-H$ | $-CH_2-$ | $-CF-CF-$<br>$CF_3$ $CF_3$ | $-CF_2-CF_2-CF_2-CF_2-CF_3$ | 9 |
| (1−28) | $-CH_3$ | $-CH_2-$ | $-CF-CF-$<br>$CF_3$ $CF_3$ | $-CF_2-CF_2-CF_2-CF_2-CF_3$ | 9 |
| (1−29) | $-H$ | $-CH_2-CH_2-$ | $-CF-CF-$<br>$CF_3$ $CF_3$ | $-CF_2-CF_2-CF_2-CF_2-CF_3$ | 9 |
| (1−30) | $-CH_3$ | $-CH_2-CH_2-$ | $-CF-CF-$<br>$CF_3$ $CF_3$ | $-CF_2-CF_2-CF_2-CF_2-CF_3$ | 9 |
| (1−31) | $-H$ | Single bond | $-CF_2-CF_2-CF_2-CF_2-CF_2-$ | $-CF_2-CF_2-CF_2-CF_2-CF_3$ | 10 |
| (1−32) | $-CH_3$ | Single bond | $-CF_2-CF_2-CF_2-CF_2-CF_2-$ | $-CF_2-CF_2-CF_2-CF_2-CF_3$ | 10 |
| (1−33) | $-H$ | $-CH_2-$ | $-CF_2-CF_2-CF_2-CF_2-CF_2-$ | $-CF_2-CF_2-CF_2-CF_2-CF_3$ | 10 |
| (1−34) | $-CH_3$ | $-CH_2-$ | $-CF_2-CF_2-CF_2-CF_2-CF_2-$ | $-CF_2-CF_2-CF_2-CF_2-CF_3$ | 10 |
| (1−35) | $-H$ | $-CH_2-CH_2-$ | $-CF_2-CF_2-CF_2-CF_2-CF_2-$ | $-CF_2-CF_2-CF_2-CF_2-CF_3$ | 10 |
| (1−36) | $-CH_3$ | $-CH_2-CH_2-$ | $-CF_2-CF_2-CF_2-CF_2-CF_2-$ | $-CF_2-CF_2-CF_2-CF_2-CF_3$ | 10 |

It is preferable that the structural unit represented by the formula (1) in the polymer A contained in the surface layer of the electrophotographic photosensitive member of the present disclosure is 5% by number or more and 95% by number or less, with respect to all the structural units contained in the polymer A, from the viewpoint of the enhancement of the dispersibility of the fluorine atom-containing resin particles. Furthermore, it is more preferable for the structural

unit represented by the formula (1) to be 50% by number or more and 95% by number or less, and is further preferable to be 70% by number or more and 90% by number or less, with respect to all the structural units contained in the polymer A.

It is preferable that the structural unit represented by the formula (1) in the polymer A contained in the surface layer of the electrophotographic photosensitive member of the present disclosure is 0.1% by mass or more and 80% by mass or less, with respect to all the structural units contained in the polymer A, from the viewpoint of the enhancement of the dispersibility of the fluorine atom-containing resin particles. In addition, in the above polymer A, it is more preferable for the component proportion ratio of the structural unit represented by the formula (1) to be 1 wt% or more and 80 wt% or less, from the viewpoint of enhancing the uniformity of dispersion and is further preferable to be 4 wt% or more and 66 wt% or less, with respect to the total number of the structural units constituting the above polymer A.

It is preferable for the polymer A to further have a structural unit represented by the following formula (2).

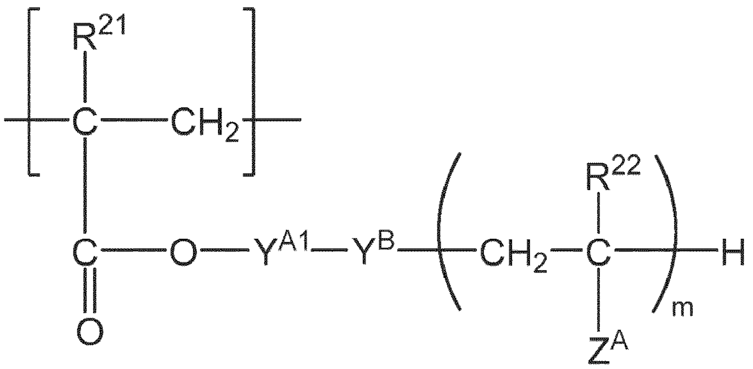

(2)

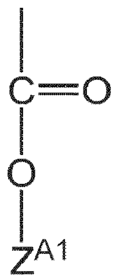

(2A)

In the formula (2),

$Y^{A1}$ represents an unsubstituted alkylene group:

$Y^{B}$ represents an unsubstituted alkylene group, an alkylene group substituted with a halogen atom, an alkylene group substituted with a hydroxy group, an ester bond (-COO-), an amide bond (-NHCO-) or a urethane bond (-NHCOO-), or alternatively, a divalent linking group that can be derived from a combination of one or more selected from the above groups and bonds, and -O- or -S-, or alternatively a single bond;

$Z^{A}$ represents a structure represented by the above formula (2A), a cyano group or a phenyl group; $R^{21}$ and $R^{22}$ represent a hydrogen atom or a methyl group; and m represents an integer of 25 or larger and 150 or smaller.

In the formula (2A),

$Z^{A1}$ represents an alkyl group having 1 to 4 carbon atoms.

In the formula (2), when $Y^{B}$ represents an ester bond, $-Y^{A1}-Y^{B}-CH_2-$ may be any one of $-Y^{A1}-CO-O-CH_2-$ and $-Y^{A1}-O-CO-CH_2-$, and is preferably $-Y^{A1}-CO-O-CH_2-$. In addition, in the formula (2), when $Y^{B}$ represents an amide bond, $-Y^{A1}-Y^{B}-CH_2-$ may be any one of $-Y^{A1}-NH-CO-CH_2-$ and $-Y^{A1}-CO-NH-CH_2-$, and is preferably $-Y^{A1}-NH-CO-CH_2-$. In addition, in the formula (2), when $Y^{B}$ is a urethane bond, $-Y^{A1}-Y^{B}-CH_2-$may be any one of $-Y^{A1}-NH-CO-O-CH_2-$ and $-Y^{A1}-O-CO-NH-CH_2-$, and is preferably$-Y^{A1}-NH-CO-O-CH_2-$.

In the above formula (2), a structure represented by $-Y^{A1}-(Y^{A2})_b-(Y^{A3})_c-(Y^{A4})_d-(Y^{A5})_e-(Y^{A6})_f-$ is preferable to $-Y^{A1}-Y^{B}-$.

Here, $Y^{A1}$ represents an unsubstituted alkylene group;

$Y^{A2}$ represents a methylene group substituted with at least one selected from the group consisting of a hydroxy group and a halogen atom;

$Y^{A3}$ represents an unsubstituted alkylene group;

$Y^{A4}$ represents an ester bond, an amide bond or a urethane bond;
$Y^{A5}$ represents an unsubstituted alkylene group;
$Y^{A6}$ represents an oxygen atom or a sulfur atom; and
b, c, d, e and f each independently represent 0 or 1.

It is preferable that the above polymer A has only the structural unit represented by the above formula (1) and the structural unit represented by the above formula (2), as structural units.

It is preferable that in the formula (2), the following moiety:

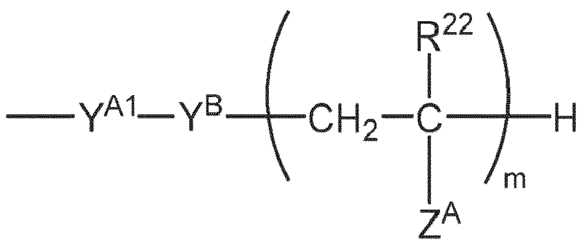

is not an acidic group having a pKa of 3 or smaller.

It is preferable that in the formula (2), the following moiety:

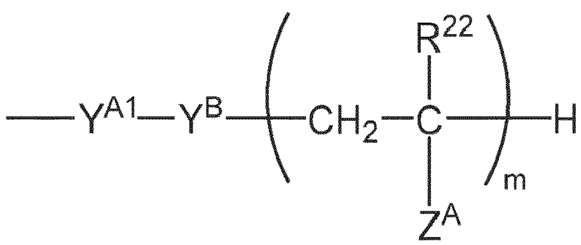

is not $-SO_3H$.

Examples of the structural unit represented by the above formula (2) include the structures shown in Table 2.

[Table 2-1]

Table 2

| Number | Structural unit represented by formula (2) | | | | | | |
|---|---|---|---|---|---|---|---|
| | $R^{21}$ | $R^{22}$ | $Y^{A1}$ | $Y^B$ | $Z^A$ | $Z^{A1}$ | m |
| u2-1 | $-CH_3$ | $-CH_3$ | $-CH_2-$ | 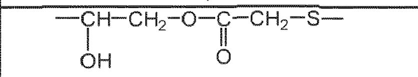 | Formula (2A) | $-CH_3$ | 60 |
| u2-2 | $-CH_3$ | $-CH_3$ | $-CH_2-$ | 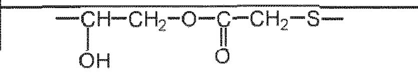 | Formula (2A) | $-CH_3$ | 25 |
| u2-3 | $-CH_3$ | $-CH_3$ | $-CH_2-$ | 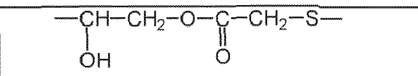 | Formula (2A) | $-CH_3$ | 150 |
| u2-4 | $-CH_3$ | $-H$ | $-CH_2-$ | 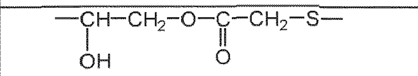 | Formula (2A) | $-CH_3$ | 60 |
| u2-5 | $-H$ | $-CH_3$ | $-CH_2-$ | 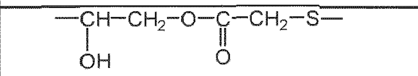 | Formula (2A) | $-CH_3$ | 60 |
| u2-6 | $-H$ | $-H$ | $-CH_2-$ | 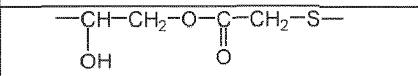 | Formula (2A) | $-CH_3$ | 60 |
| u2-7 | $-CH_3$ | $-CH_3$ | $-CH_2-CH_2-$ | 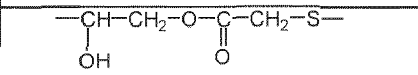 | Formula (2A) | $-CH_3$ | 60 |
| u2-8 | $-CH_3$ | $-CH_3$ | $-CH_2-$ | 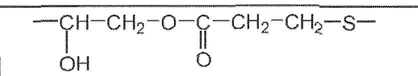 | Formula (2A) | $-CH_3$ | 60 |
| u2-9 | $-CH_3$ | $-CH_3$ | $-CH_2-CH_2-$ | 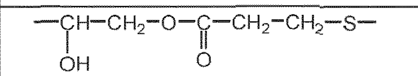 | Formula (2A) | $-CH_3$ | 60 |
| u2-10 | $-CH_3$ | $-CH_3$ | $-CH_2-$ | 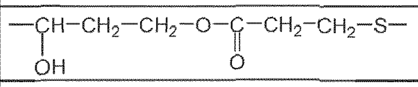 | Formula (2A) | $-CH_3$ | 60 |
| u2-11 | $-CH_3$ | $-CH_3$ | $-CH_2-CH_2-$ | 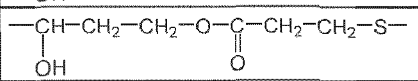 | Formula (2A) | $-CH_3$ | 60 |
| u2-12 | $-CH_3$ | $-CH_3$ | $-CH_2-$ | 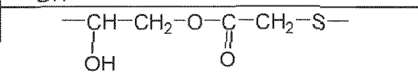 | Formula (2A) | $-CH_2-CH_3$ | 60 |
| u2-13 | $-CH_3$ | $-CH_3$ | $-CH_2-$ | 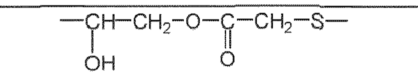 | Formula (2A) | $-CH_2CH_2CH_2CH_3$ | 60 |
| u2-14 | $-CH_3$ | $-H$ | $-CH_2-$ | 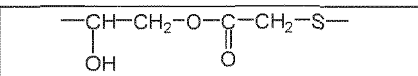 | Formula (2A) | $-CH_2CH_2CH_2CH_3$ | 60 |
| u2-15 | $-CH_3$ | $-CH_3$ | $-CH_2-$ | 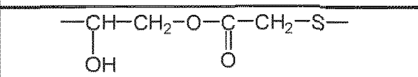 | Formula (2A) | $-CH_2CH(CH_3)_2$ | 60 |
| u2-16 | $-CH_3$ | $-H$ | $-CH_2-$ | 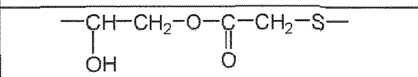 | Formula (2A) | $-CH_2CH(CH_3)_2$ | 60 |
| u2-17 | $-CH_3$ | $-CH_3$ | $-CH_2-$ | 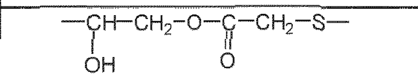 | Formula (2A) | $-C(CH_3)_3$ | 60 |
| u2-18 | $-CH_3$ | $-H$ | $-CH_2-$ | 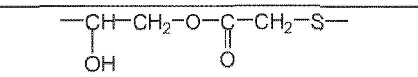 | Formula (2A) | $-C(CH_3)_3$ | 60 |
| u2-19 | $-CH_3$ | $-H$ | $-CH_2-$ | 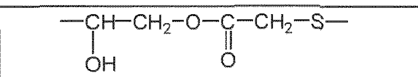 | Phenyl group | – | 60 |
| u2-20 | $-CH_3$ | $-H$ | $-CH_2-$ | 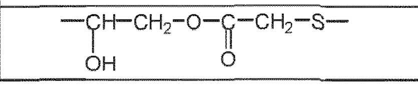 | Cyano group | – | 60 |

[Table 2-2]

Table 2 (continued)

| Number | Structural unit represented by formula (2) | | | | | | |
|---|---|---|---|---|---|---|---|
| | $R^{21}$ | $R^{22}$ | $Y^{A1}$ | $Y^B$ | $Z^A$ | $Z^{A1}$ | m |
| u2-21 | $-CH_3$ | $-CH_3$ | $-CH_2-CH_2-$ | 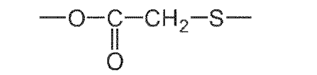 | Formula (2A) | $-CH_3$ | 60 |
| u2-22 | $-CH_3$ | $-CH_3$ | $-CH_2-CH_2-$ | 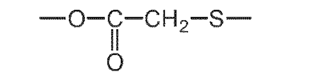 | Formula (2A) | $-CH_3$ | 60 |
| u2-23 | $-H$ | $-CH_3$ | $-CH_2-CH_2-$ | 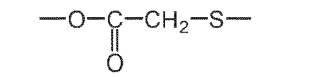 | Formula (2A) | $-CH_3$ | 60 |
| u2-24 | $-CH_3$ | $-CH_3$ | $-CH_2-$ | 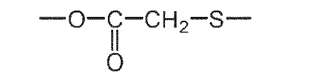 | Formula (2A) | $-CH_3$ | 60 |
| u2-25 | $-CH_3$ | $-CH_3$ | $-CH_2CH_2CH_2CH_2-$ | 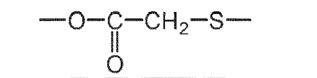 | Formula (2A) | $-CH_3$ | 60 |
| u2-26 | $-CH_3$ | $-CH_3$ | $-CH_2-CH_2-$ | 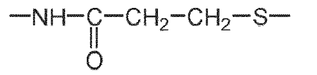 | Formula (2A) | $-CH_3$ | 60 |
| u2-27 | $-H$ | $-CH_3$ | $-CH_2-CH_2-$ | 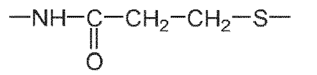 | Formula (2A) | $-CH_3$ | 60 |
| u2-28 | $-CH_3$ | $-CH_3$ | $-CH_2-CH_2-$ | 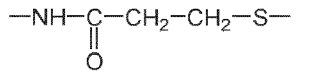 | Formula (2A) | $-CH_3$ | 60 |
| u2-29 | $-CH_3$ | $-CH_3$ | $-CH_2-CH_2-$ | 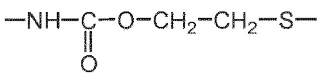 | Formula (2A) | $-CH_3$ | 60 |
| u2-30 | $-H$ | $-CH_3$ | $-CH_2-CH_2-$ | 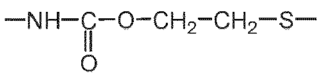 | Formula (2A) | $-CH_3$ | 60 |
| u2-31 | $-CH_3$ | $-CH_3$ | $-CH_2-CH_2-$ | 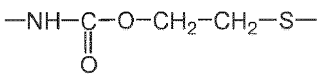 | Formula (2A) | $-CH_3$ | 60 |
| u2-32 | $-CH_3$ | $-H$ | $-CH_2-CH_2-$ | 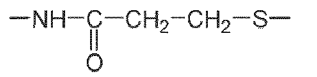 | Formula (2A) | $-CH_3$ | 60 |
| u2-33 | $-H$ | $-H$ | $-CH_2-CH_2-$ | 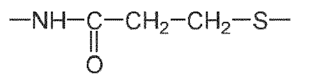 | Formula (2A) | $-CH_3$ | 60 |
| u2-34 | $-CH_3$ | $-H$ | $-CH_2-CH_2-$ | 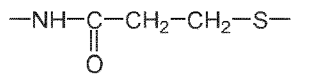 | Formula (2A) | $-CH_3$ | 60 |
| u2-35 | $-CH_3$ | $-H$ | $-CH_2-CH_2-$ | 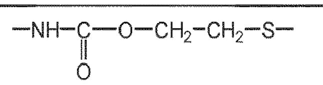 | Formula (2A) | $-CH_3$ | 60 |
| u2-36 | $-H$ | $-H$ | $-CH_2-CH_2-$ | 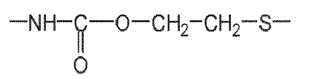 | Formula (2A) | $-CH_3$ | 60 |
| u2-37 | $-CH_3$ | $-H$ | $-CH_2-CH_2-$ | 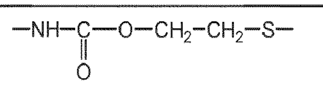 | Formula (2A) | $-CH_3$ | 60 |

In the above polymer A, it is preferable that a ratio of a content of the structural unit represented by the formula (1) to a content of the structural unit represented by the formula (2), in other words, the content of the structural unit represented by the above formula (1) : the content of the structural unit represented by the above formula (2) is 1 : 19 to 19 : 1, by a molar ratio. The molar ratio is more preferably 1 : 1 to 19 : 1, and is further preferably 7 : 3 to 9 : 1.

It is preferable that a weight average molecular weight of the polymer A is 16,000 or more and 100,000 or less,

which is contained in the surface layer of the electrophotographic photosensitive member of the present disclosure and has the structural unit represented by the formula (1), from the viewpoints of the enhancement of the dispersibility of the fluorine atom-containing resin particles and the suppression of the potential fluctuation. Furthermore, it is more preferable that the weight average molecular weight of the polymer A is 18,000 or more and 80,000 or less, which has the structural unit represented by the formula (1).

The weight average molecular weight of the polymer A having the structural unit represented by the formula (1) can be measured and calculated according to the following method.

(Measurement of weight average molecular weight by GPC)

The weight average molecular weight according to the present disclosure is measured with gel permeation chromatography (GPC), in the following way.

Firstly, the sample is dissolved in tetrahydrofuran (THF) over 24 hours at room temperature. Then, the obtained solution is filtered through a solvent-resistant membrane filter "Maeshori disc" (manufactured by Tosoh Corporation) having a pore diameter of 0.2 μm, and a sample solution is obtained. For information, the sample solution is adjusted so that the concentration of the components soluble in THF becomes approximately 0.8% by mass. The sample solution is subjected to the measurement under the following conditions.

- Apparatus: HLC8120GPC (Detector: RI) (manufactured by Tosoh Corporation)
- Column: seven sequences of Shodex KF-801, 802, 803, 804, 805, 806 and 807 (manufactured by Showadenkosya Co., Ltd.).
- Eluent: tetrahydrofuran (THF)
- Flow rate: 1.0 ml/min
- Oven temperature: 40.0°C
- Amount of sample to be injected: 0.10 ml

When the molecular weight of the sample is calculated, a molecular weight calibration curve is used which is prepared with the use of a standard polystyrene resin (for example, trade name "TSK standard polystyrene F-850, F-450, F-288, F-128, F-80, F-40, F-20, F-10, F-4, F-2, F-1, A-5000, A-2500, A-1000 or A-500", produced by Tosoh Corporation).

It is preferable that a content of the polymer A having the structural unit represented by the formula (1) is 2% by mass or more and 10% by mass or less with respect to the fluorine atom-containing resin particle in the surface layer, from the viewpoints of the enhancement of the dispersibility of the fluorine atom-containing resin particles and the suppression of the potential fluctuation. Furthermore, it is more preferable that the content of the polymer A having the structural unit represented by the formula (1) is 4% by mass or more and 8% by mass or less with respect to the fluorine atom-containing resin particle in the surface layer, from the viewpoints of the enhancement of the dispersibility and the suppression of the potential fluctuation.

<Electrophotographic photosensitive member>

FIG. 1 illustrates one example of a layer structure of the electrophotographic photosensitive member of the present disclosure. In FIG. 1, an undercoat layer 102, a charge generation layer 103, a charge transport layer 104, and a surface layer 105 are layered on a support 101. The photosensitive layer may be configured to be a multilayer type photosensitive layer having a charge generation layer and a charge transport layer, or may be configured to be a single-layer type photosensitive layer containing a charge generation substance and a charge transport substance.

The surface layer of the electrophotographic photosensitive member of the present disclosure contains the fluorine atom-containing resin particle, a binder material, and the polymer A having the structural unit represented by the formula (1).

As a method for producing the electrophotographic photosensitive member of the present disclosure, there is a method of preparing a coating liquid of each layer which will be described later, applying desired layers sequentially, and drying the layers. Examples of the application method of the coating liquid at this time include dip coating, spray coating, inkjet coating, roll coating, die coating, blade coating, curtain coating, wire bar coating, and ring coating. Among the methods, the dip coating is preferable, from the viewpoints of efficiency and productivity.

The configuration of the electrophotographic photosensitive member of the present disclosure will be described below.

<Support>

It is preferable that the support of the electrophotographic photosensitive member is a member having electroconductivity (electroconductive support). In addition, shapes of the support include a cylindrical shape, a belt shape and a sheet shape. Among the shapes, it is preferable to be the cylindrical support. In addition, the surface of the support may be subjected to electrochemical treatment such as anodization, blast treatment, and cutting treatment.

As a material of the support, a metal, a resin, glass and the like are preferable. Examples of the metal include aluminum, iron, nickel, copper, gold, stainless steel, and alloys thereof. Among the metals, it is preferable to be an aluminum support using aluminum.

In addition, it is preferable to impart the electroconductivity to the resin or the glass, by treatment such as mixing of or coating with an electroconductive material.

<Electroconductive layer>

On the support, an electroconductive layer may be provided.

Due to the electroconductive layer being provided, the support can conceal scratches and unevenness on its surface and can control the reflection of light on its surface.

It is preferable that the electroconductive layer contains an electroconductive particle and a resin.

Examples of a material of the electroconductive particle include a metal oxide, a metal, and carbon black.

Examples of the metal oxides include zinc oxide, aluminum oxide, indium oxide, silicon oxide, zirconium oxide, tin oxide, titanium oxide, strontium titanate, magnesium oxide, antimony oxide and bismuth oxide. Examples of the metal include aluminum, nickel, iron, nichrome, copper, zinc and silver.

Among these substances, it is preferable to use a metal oxide particle as the electroconductive particle, and is more preferable to use, in particular, a titanium oxide particle, a tin oxide particle and a zinc oxide particle.

When a metal oxide particle is used as the electroconductive particle, the surface of the metal oxide particle may be treated with a silane coupling agent or the like, or the metal oxide particle may be doped with an element such as phosphorus or aluminum, or with an oxide thereof.

In addition, the electroconductive particle may have a multilayer structure having a core material particle and a covering layer which covers the particle. Examples of the core material particle include a titanium oxide particle, a barium sulfate particle and a zinc oxide particle. Examples of the covering layer include a metal oxide particle such as tin oxide.

In addition, when a metal oxide particle is used as the electroconductive particle, it is preferable for a volume-average particle size thereof to be 1 nm or larger and 500 nm or smaller, and is more preferable to be 3 nm or larger and 400 nm or smaller.

Examples of the resin include a polyester resin, a polycarbonate resin, a polyvinyl acetal resin, an acrylic resin, a silicone resin, an epoxy resin, a melamine resin, a polyurethane resin, a phenol resin and an alkyd resin.

In addition, the electroconductive layer may further contain a concealing agent such as a silicone oil, a resin particle and titanium oxide.

The electroconductive layer can be formed by preparing a coating liquid for the electroconductive layer, wherein the coating liquid contains each of the above materials and a solvent, forming a coating film of the coating liquid on the support, and drying the coating film. Examples of the solvent to be used for the coating liquid for the electroconductive layer include an alcohol-based solvent, a sulfoxide-based solvent, a ketone-based solvent, an ether-based solvent, an ester-based solvent and an aromatic hydrocarbon-based solvent. Examples of a dispersion method for dispersing the electroconductive particles in the coating liquid for the electroconductive layer include methods which use a paint shaker, a sand mill, a ball mill, and a liquid collision type high-speed dispersion machine, respectively.

It is preferable for an average film thickness of the electroconductive layer to be 1 μm or larger and 50 μm or smaller, and is particularly preferable to be 3 μm or larger and 40 μm or smaller.

<Undercoat layer>

In the present disclosure, an undercoat layer may be provided on the support or the electroconductive layer. The undercoat layer which has been provided can thereby enhance an adhesion function between layers and impart a charge injection inhibition function.

It is preferable that the undercoat layer contains a resin. In addition, the undercoat layer may be formed as a cured film, by polymerization of a composition containing a monomer having a polymerizable functional group.

Examples of the resin include a polyester resin, a polycarbonate resin, a polyvinyl acetal resin, an acrylic resin, an epoxy resin, a melamine resin, a polyurethane resin, a phenol resin, and a polyvinyl phenol resin, an alkyd resin, a polyvinyl alcohol resin, a polyethylene oxide resin, a polypropylene oxide resin, a polyamide resin, a polyamide acid

resin, a polyimide resin, a polyamide-imide resin and a cellulose resin.

Examples of the polymerizable functional group which the monomer having a polymerizable functional group has include an isocyanate group, a block isocyanate group, a methylol group, an alkylated methylol group, an epoxy group, a metal alkoxide group, a hydroxy group, an amino group, a carboxyl group, a thiol group, a carboxylic acid anhydride group, and a carbon-carbon double bond group.

The undercoat layer may further contain an electron transport substance, a metal oxide particle, a metal particle, an electroconductive polymer or the like, for the purpose of enhancing electric characteristics. Among these substances, it is preferable to use an electron transport substance and a metal oxide particle.

Examples of the electron transport substance include a quinone compound, an imide compound, a benzimidazole compound, a cyclopentadienylidene compound, a fluorenone compound, a xanthone compound, a benzophenone compound, a cyano vinyl compound, an aryl halide compound, a silole compound, and a boron-containing compound. The undercoat layer may be formed as a cured film, by using an electron transport substance having a polymerizable functional group as an electron transport substance, and copolymerizing the electron transport substance with the above described monomer having the polymerizable functional group.

Examples of the metal oxide particle include particles of indium tin oxide, tin oxide, indium oxide, titanium oxide, strontium titanate, zinc oxide and aluminum oxide. A particle of silicon dioxide can also be used. Examples of the metal particle include particles of gold, silver and aluminum.

The metal oxide particle contained in the undercoat layer may be subjected to surface treatment with the use of a surface treatment agent such as a silane coupling agent, and be used.

As a method of surface-treating the metal oxide particle, a general method is used. Examples thereof include a dry method and a wet method.

The dry method is a method involving adding an aqueous alcohol solution, an organic solvent solution or an aqueous solution containing the surface treatment agent, to the metal oxide particles being stirred in a high-speed stirrable mixer such as a Henschel mixer, followed by uniform dispersion and then drying.

In addition, the wet method is a method of dispersing a metal oxide particle and the surface treatment agent in a solvent, by stirring or by a sand mill using glass beads or the like, and after the dispersion, removing the solvent by filtration or distillation under reduced pressure. After removal of the solvent, it is preferable to further performing baking at 100°C or higher.

The undercoat layer may further contain an additive agent. For example, known materials can be contained therein, which include metal particles such as an aluminum particle; electroconductive substance particles such as carbon black; charge transport substances; metal chelate compounds; and organometallic compounds.

The undercoat layer can be formed by preparing a coating liquid for the undercoat layer, wherein the coating liquid contains each of the above materials and a solvent, forming this coating film on the support or the electroconductive layer, and drying and/or curing the coating film.

Examples of the solvent which is used in the coating liquid for the undercoat layer include organic solvents such as an alcohol, a sulfoxide, a ketone, an ether, an ester, an aliphatic halogenated hydrocarbon, and an aromatic compound. In the present disclosure, it is preferable to use an alcohol-based or ketone-based solvent.

Examples of a dispersion method for preparing the coating liquid for the undercoat layer include methods with the use of a homogenizer, an ultrasonic dispersing machine, a ball mill, a sand mill, a roll mill, a vibration mill, an attritor, and a liquid collision type high-speed dispersing machine.

It is preferable for an average film thickness of the undercoat layer to be 0.1 μm or larger and 50 μm or smaller, is more preferable to be 0.2 μm or larger and 40 μm or smaller, and is particularly preferable to be 0.3 μm or larger and 30 μm or smaller.

<Photosensitive layer>

The photosensitive layer of the electrophotographic photosensitive member is mainly classified into (1) a multilayer type photosensitive layer and (2) a single-layer type photosensitive layer. (1) A multilayer type photosensitive layer is a photosensitive layer which includes a charge generation layer containing a charge generation substance, and a charge transport layer containing a charge transport substance. (2) A single-layer type photosensitive layer is a photosensitive layer containing both a charge generation substance and a charge transport substance.

(1) Multilayer type photosensitive layer

The multilayer type photosensitive layer includes a charge generation layer and a charge transport layer.

(1-1) Charge generation layer

It is preferable that the charge generation layer contains a charge generation substance and a resin.

Examples of the charge generation substance include an azo pigment, a perylene pigment, a polycyclic quinone pigment, an indigo pigment and a phthalocyanine pigment. Among these pigments, the azo pigment and the phthalocyanine pigment are preferable. Among the phthalocyanine pigments, an oxytitanium phthalocyanine pigment, a chlorogallium phthalocyanine pigment and a hydroxygallium phthalocyanine pigment are preferable.

It is preferable for a content of the charge generation substance in the charge generation layer to be 40% by mass or more and 85% by mass or less, and is more preferable to be 60% by mass or more and 80% by mass or less, with respect to the total mass of the charge generation layer.

Examples of the resin include a polyester resin, a polycarbonate resin, a polyvinyl acetal resin, a polyvinyl butyral resin, an acrylic resin, a silicone resin, an epoxy resin, a melamine resin, a polyurethane resin, a phenol resin, a polyvinyl alcohol resin, a cellulose resin, a polystyrene resin, a polyvinyl acetate resin and a polyvinyl chloride resin. Among these resins, the polyvinyl butyral resin is more preferable.

In addition, the charge generation layer may further contain an additive agent such as an antioxidizing agent and an ultraviolet absorbing agent. Specific examples thereof include a hindered phenol compound, a hindered amine compound, a sulfur compound, a phosphorus compound and a benzophenone compound.

The charge generation layer can be formed by preparing a coating liquid for the charge generation layer, wherein the coating liquid contains each of the above materials and a solvent, forming this coating film on the undercoat layer, and drying the coating film. Examples of the solvent to be used for the coating liquid include an alcohol-based solvent, a sulfoxide-based solvent, a ketone-based solvent, an ether-based solvent, an ester-based solvent, and an aromatic hydrocarbon-based solvent.

It is preferable for an average film thickness of the charge generation layer to be 0.1 μm or larger and 1 μm or smaller, and is more preferable to be 0.15 μm or larger and 0.4 μm or smaller.

(1-2) Charge transport layer

It is preferable that the charge transport layer contains a charge transport substance and one binder material.

Examples of the charge transport substance include a polycyclic aromatic compound, a heterocyclic compound, a hydrazone compound, a styryl compound, an enamine compound, a triarylamine compound, and resins having a group derived from these substances. Among these materials, the triarylamine compound is preferable.

It is preferable for a content of the charge transport substance in the charge transport layer to be 25% by mass or more and 70% by mass or less, and is more preferable to be 30% by mass or more and 55% by mass or less, with respect to a total mass of the charge transport layer.

As the binder material, a thermoplastic resin (hereinafter also referred to as "resin ") is used. Examples of the thermoplastic resin include a polyester resin, a polycarbonate resin, an acrylic resin and a polystyrene resin. Among these resins, the polycarbonate resin and the polyester resin are preferable. In the polyester resins, a polyarylate resin is particularly preferable.

A content ratio (mass ratio) of the charge transport substance to the resin is preferably 4 :10 to 20 : 10, and is more preferably 5 :10 to 12 :10.

When a protective layer which will be described later is not provided, the charge transport layer becomes a surface layer. In this case, the charge transport layer contains the fluorine atom-containing resin particle, the binder material, and the polymer A having the structural unit represented by the above formula (1). In addition, it is preferable that a content ratio of the fluorine atom-containing resin particle in the charge transport layer is 5% by mass or more and 40% by mass or less, with respect to a total mass of the charge transport layer. In addition, it is preferable for the content ratio of the fluorine atom-containing resin particle in the charge transport layer to be 5% by mass or more and 15% by mass or less, and is more preferable to be 7 % by mass or more and 10% by mass or less, from the viewpoints of the enhancement of the uniformity of dispersion of the fluorine atom-containing resin particles and the enhancement of the abrasion resistance.

In the present disclosure, it is preferable that the surface layer contains a thermoplastic resin as a binder material and a charge transport substance, and that the thermoplastic resin is a polycarbonate resin or a polyarylate resin.

Furthermore, in the present disclosure, it is preferable that the charge transport substance is any one or both of the compounds represented by the following formula (3) and the following formula (4).

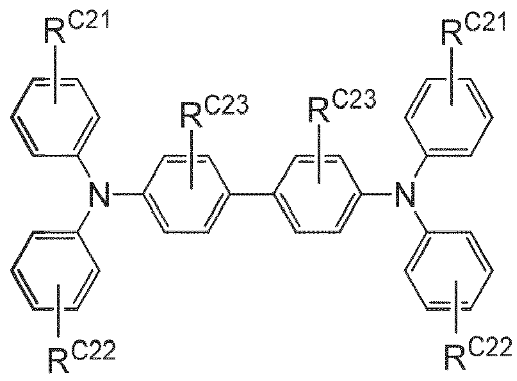

(3)

In the formula (3), $R^{C21}$, $R^{C22}$ and $R^{C23}$ are each independently a hydrogen atom, a halogen atom, an alkyl group having 1 to 10 carbon atoms, an alkoxy group having 1 to 10 carbon atoms, or an aryl group having 6 to 10 carbon atoms.

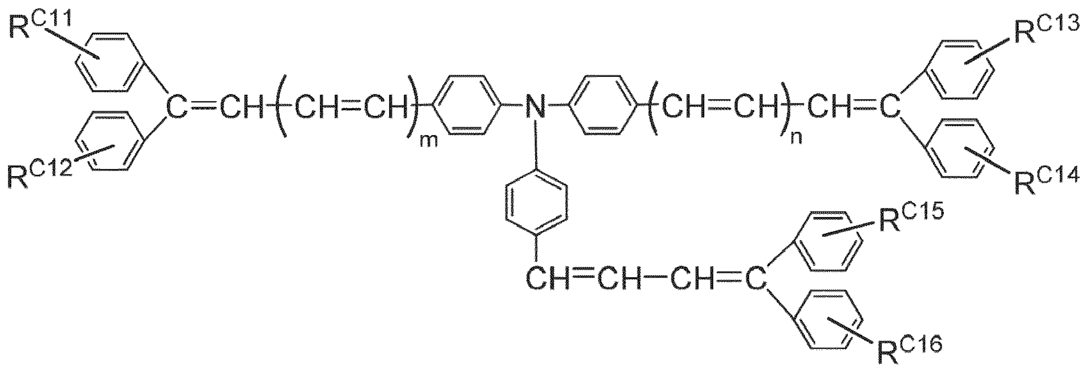

(4)

In the formula (4), $R^{C11}$, $R^{C12}$, $R^{C13}$, $R^{C14}$, $R^{C15}$ and $R^{C16}$ are each independently a hydrogen atom, a halogen atom, an alkyl group having 1 to 20 carbon atoms, an alkoxy group having 1 to 20 carbon atoms, or an aryl group having 6 to 30 carbon atoms, in any of which two adjacent substituents may be bonded to each other to form a hydrocarbon ring structure; and m and n are each independently 0, 1 or 2.

In addition, the charge transport layer may contain an additive agent such as an antioxidizing agent, an ultraviolet absorbing agent, a plasticizing agent and a leveling agent. The specific additive agents include a hindered phenol compound, a hindered amine compound, a sulfur compound, a phosphorus compound, a benzophenone compound, a siloxane modified resin, silicone oil, a polystyrene resin particle, a polyethylene resin particle and a boron nitride particle.

The charge transport layer can be formed by preparing a coating liquid for the charge transport layer, wherein the coating liquid contains each of the above materials and a solvent, forming this coating film on the charge generation layer, and drying the coating film. Examples of the solvent to be used for the coating liquid include an alcohol-based solvent, a ketone-based solvent, an ether-based solvent, an ester-based solvent, and an aromatic hydrocarbon-based solvent. Among these solvents, the ether-based solvent or the aromatic hydrocarbon-based solvent is preferable.

It is preferable for an average film thickness of the charge transport layer to be 5 μm or larger and 50 μm or smaller, is more preferable to be 8 μm or larger and 40 μm or smaller, and is particularly preferable to be 10 μm or larger and 30 μm or smaller.

(2) Single-layer type photosensitive layer

The single-layer type photosensitive layer can be formed by preparing a coating liquid for the photosensitive layer, wherein the coating liquid contains the charge generation substance, the charge transport substance, a resin and a solvent, forming this coating film on the undercoat layer, and drying the coating film. The charge generation substance, the charge transport substance and the resin are the same as the examples of the materials in the above "(1) multilayer type photosensitive layer".

<Protective layer>

In the present invention, a protective layer may be provided on the photosensitive layer. Due to the protective

layer provided therein, the electrophotographic photosensitive member can enhance its durability.

The protective layer may be formed also as a cured film, by the polymerization of a composition which becomes a raw material of the binder material, and contains, for example, a monomer having a polymerizable functional group. Examples of a reaction at this time include a thermal polymerization reaction, a photopolymerization reaction, and a radiation-induced polymerization reaction. Examples of the polymerizable functional group which the monomer having a polymerizable functional group has include an isocyanate group, a block isocyanate group, a methylol group, an alkylmethylol group, an epoxy group, a metal alkoxyl group, a hydroxy group, an amino group, a carboxyl group, a thiol group, a carboxylic acid anhydride group, and a group containing a carbon-carbon double bond. Examples of the group containing the carbon-carbon double bond include an acryloyl group and a methacryloyl group. As a monomer having the polymerizable functional group, a monomer having charge transporting capability may be used.

When the protective layer is provided, the protective layer becomes the surface layer of the electrophotographic photosensitive member. In this case, the protective layer contains the fluorine atom-containing resin particle, the binder material, and the polymer A having the structural unit represented by the formula (1). Note that when the protective layer is not provided, in the case of the electrophotographic photosensitive member having the multilayer type photosensitive layer, the charge transport layer is the surface layer, and in the case of the electrophotographic photosensitive member having the single-layer type photosensitive layer, the photosensitive layer is the surface layer.

The protective layer may contain an additive agent such as an antioxidizing agent, an ultraviolet absorbing agent, a plasticizing agent and a leveling agent. Specific examples include a hindered phenol compound, a hindered amine compound, a sulfur compound, a phosphorus compound, a benzophenone compound, a siloxane modified resin and a silicone oil.

The protective layer can be formed by preparing a coating liquid for the protective layer, wherein the coating liquid contains each of the above materials and a solvent, forming this coating film on the photosensitive layer, and drying and/or curing the coating film. Examples of the solvent to be used for the coating liquid include an alcohol-based solvent, a ketone-based solvent, an ether-based solvent, a sulfoxide-based solvent, an ester-based solvent and an aromatic hydrocarbon-based solvent.

It is preferable for an average film thickness of the protective layer to be 0.5 μm or larger and 10 μm or smaller, and is more preferable to be 1 μm or larger and 7 μm or smaller.

One of preferable embodiments of the protective layer includes a protective layer that contains a cured product of a composition containing a hole transporting compound having a polymerizable functional group.

It is preferable that the hole transporting compound having a polymerizable functional group is a compound represented by the following formula (CT-1) or (CT-2).

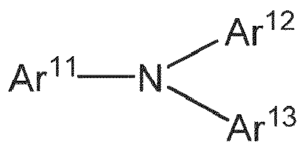

(CT-1)

In the formula (CT-1), $Ar^{11}$ to $Ar^{13}$ each independently represent a substituted aryl group or an unsubstituted aryl group; and the substituent of the substituted aryl group is an alkyl group having 1 to 6 carbon atoms or a monovalent functional group represented by any one of the following formulae (P-1) to (P-3), provided that the compound represented by the formula (CT -1) has at least one monovalent functional group represented by any one of the following formulae (P-1) to (P-3).

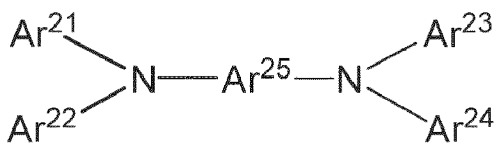

(CT-2)

In the formula (CT-2), $Ar^{21}$ to $Ar^{24}$ each independently represent a substituted aryl group or an unsubstituted aryl group, and $Ar^{25}$ represents a substituted arylene group or an unsubstituted arylene group; the substituent of the substituted aryl group is an alkyl group having 1 to 6 carbon atoms or a monovalent functional group represented by the following formulae (P-1) to (P-3); and the substituent of the substituted arylene group is an alkyl group having 1 to 6 carbon atoms or a monovalent functional group represented by the following formulae (P-1) to (P-3), provided that the compound represented by the formula (CT-2) has at least one monovalent functional group represented by any one of the following formulae (P-1) to (P-3).

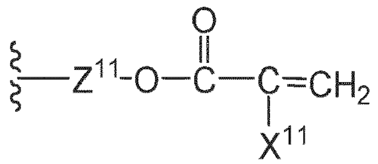

(P-1)

In the formula (P-1), $Z^{11}$ represents a single bond or an alkylene group having 1 to 6 carbon atoms, and $X^{11}$ represents a hydrogen atom or a methyl group.

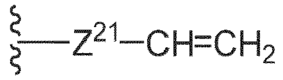

(P-2)

In the formula (P-2), $Z^{21}$ represents a single bond or an alkylene group having 1 to 6 carbon atoms.

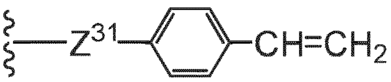

(P-3)

In the formula (P-3), $Z^{31}$ represents a single bond or an alkylene group having 1 to 6 carbon atoms.

In this case, the protective layer contains a fluorine atom-containing resin particle, a binder material, and a polymer A having a structural unit represented by the above formula (1). In addition, it is preferable that a content ratio of the fluorine atom-containing resin particle in the protective layer is 5% by mass or more and 40% by mass or less, with respect to a total mass of the protective layer. Furthermore, it is preferable for the content ratio of the fluorine atom-containing resin particle in the protective layer to be 20% by mass or more and 40% by mass or less, and is more preferable to be 25% by mass or more and 35% by mass or less, from the viewpoints of the enhancement of the uniformity of dispersion of the fluorine atom-containing resin particles and the enhancement of the abrasion resistance.

The protective layer of the electrophotographic photosensitive member of the present disclosure may include: a cured product of a charge transporting compound serving as a binder material, which will be described later, and at least one triazine compound selected from the group consisting of a guanamine compound and a melamine compound; a fluorine atom-containing resin particle; and a polymer A having a structural unit represented by the formula (1).

The protective layer of the present invention may further employ a mixture of a phenol resin, a melamine resin, a urea resin, an alkyd resin and the like. In addition, in order to enhance the strength, having more functional groups in one molecule, such as a spiroacetal-based guanamine resin (for example, "CTU-guanamine " (Ajinomoto Fine-Techno Co., Inc.)) may be used.

<Charge transporting compound>

The charge transporting compound in the present disclosure is a compound having an organic group derived from a compound having a charge transporting capability, and at least one polymerizable substituent (hereinafter also referred to as a "functional group ").

Examples of the functional group which the charge transporting compound has include a hydroxy group (-OH), a methylol group (-CHzOH), a methoxy group ($-OCH_3$), an amino group ($-NH_2$), a thiol group (-SH), and a carboxyl group (-COOH).

Among these groups, at least one functional group selected from a methylol group and a methoxy group is preferable.

Examples of the compound having the charge transporting capability in the organic group which is derived from the compound having the charge transporting capability preferably include arylamine derivatives. Examples of the arylamine derivatives include a triphenylamine derivative and a tetraphenylbenzidine derivative.

Specific examples of the charge transporting compound include the following compounds.

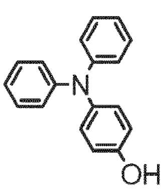
C-1

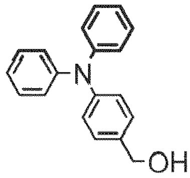
C-2

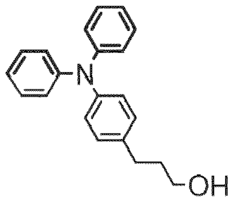
C-3

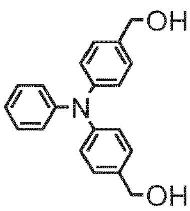
C-4

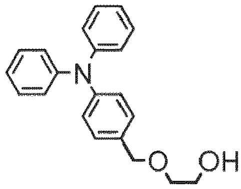
C-5

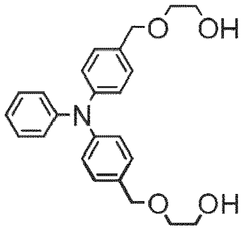
C-6

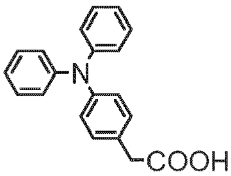
C-7

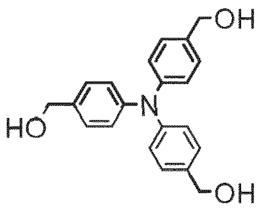
C-8

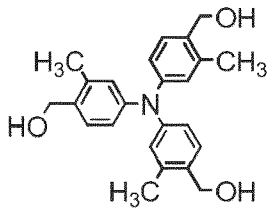
C-9

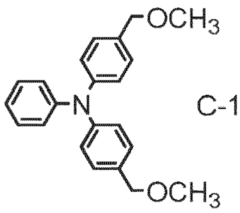
C-10

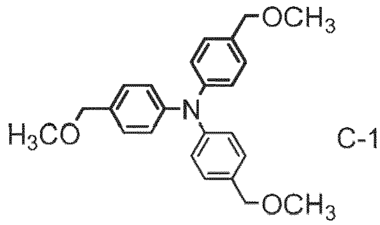
C-11

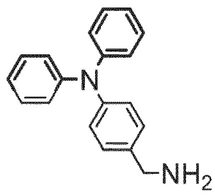
C-12

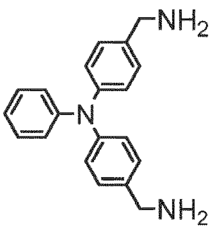
C-13

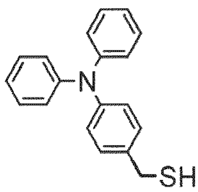
C-14

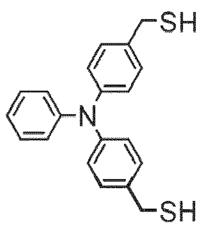
C-15

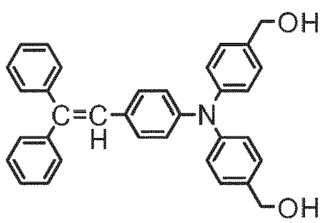
C-16

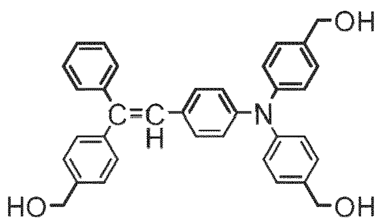
C-17

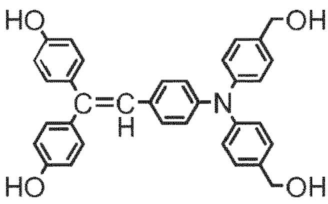
C-18

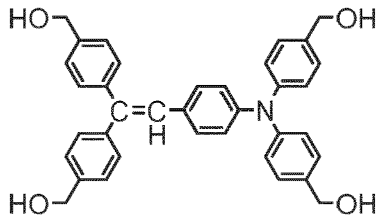
C-19

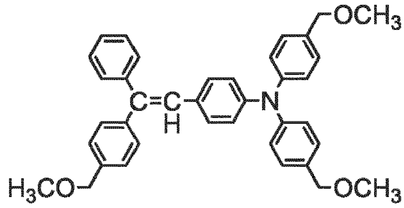
C-20

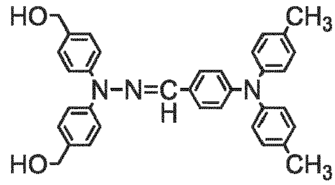
C-21

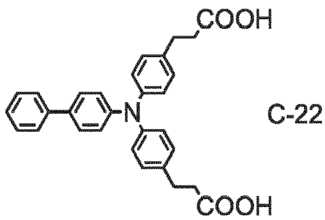
C-22

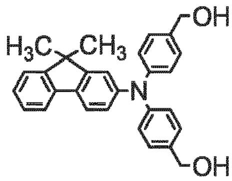
C-23

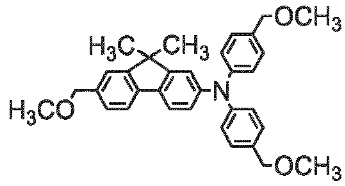
C-24

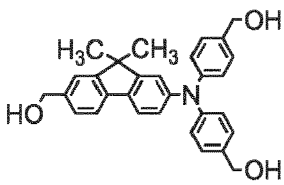
C-25

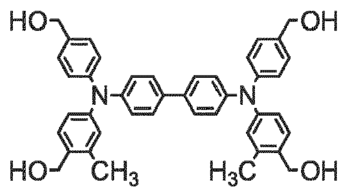
C-26

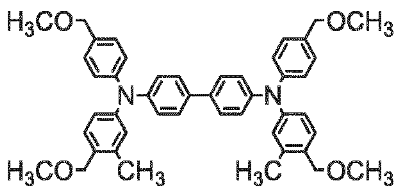
C-27

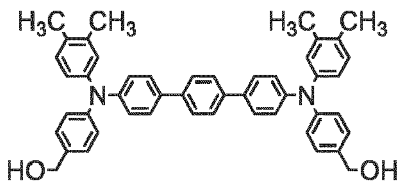
C-28

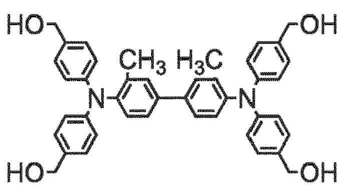
C-29

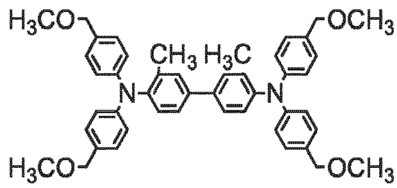
C-30

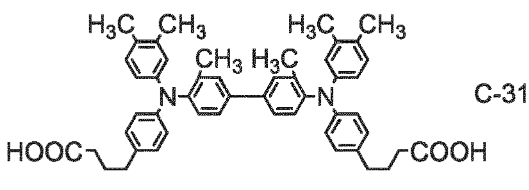
C-31

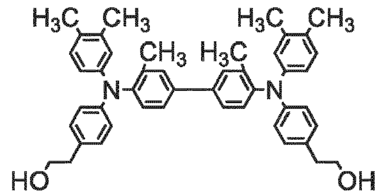
C-32

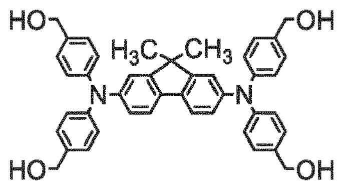

C-33

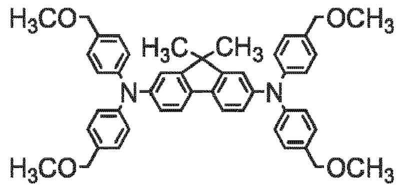

C-34

It is particularly preferable for the protective layer to contain at least one triazine compound selected from a guanamine compound represented by the following formula (A) and a melamine compound represented by the following formula (B).

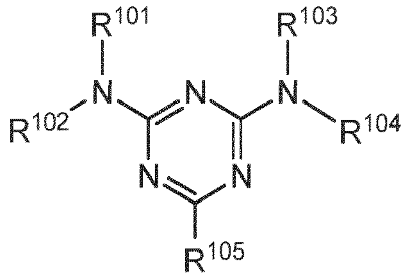

(A)

In the formula (A),

$R^{101}$ to $R^{104}$ each independently represent a hydrogen atom, a hydroxymethyl group or an alkoxymethyl group, and at least one of $R^{101}$ to $R^{104}$ is a hydroxymethyl group or an alkoxymethyl group; and
$R^{105}$ represents an alkyl group which may have a substituent, a phenyl group which may have a substituent, or a cycloalkyl group which may have a substituent, and
the substituent that the alkyl group, the phenyl group and the cycloalkyl group which are each represented by $R^{105}$ may each have is an alkyl group and an alkoxy group.

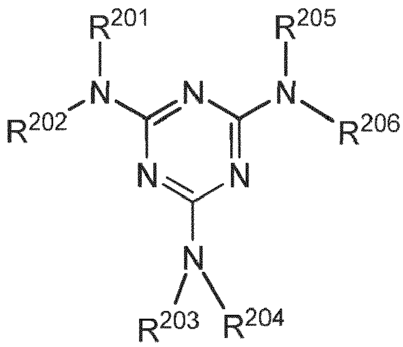

(B)

In the formula (B), $R^{201}$ to $R^{206}$ each independently represent a hydrogen atom, a hydroxymethyl group, an alkoxymethyl group or an alkoxy group, and at least one of $R^{201}$ to $R^{206}$ is a hydroxymethyl group, an alkoxymethyl group or an alkoxy group.

When the protective layer contains at least one triazine compound selected from the guanamine compound represented by the above formula (A) and the melamine compound represented by the above formula (B), the film strength enhances. Furthermore, these compounds have a nitrogen atom that contributes to electron transportability, and accordingly the transportability for electrons in the protective layer enhances.

The triazine compound means a compound containing a triazine ring, and in the case of the present invention, is a guanamine compound or a melamine compound.

It is preferable that the cured product of the charge transporting compound (a) and the triazine compound (b) which are contained in the surface layer of the electrophotographic photosensitive member of the present invention is a cured product obtained by reaction at a molar ratio of b : a = 1 : 3 to 1 : 300.

b : a = 1 : 100 or smaller is more referable from the viewpoint of the abrasion resistance of the surface layer, and b : a = 1 : 5 or larger is more preferable from the viewpoint of the suppression of the potential fluctuation due to the repeated use.

In this case, the protective layer contains the fluorine atom-containing resin particle, and the polymer A having a structural unit represented by the above formula (1). In addition, it is preferable that a content ratio of the fluorine atom-containing resin particle in the protective layer is 5% by mass or more and 40% by mass or less, with respect to a total mass of the protective layer. Furthermore, it is preferable for the content ratio of the fluorine atom-containing resin particle in the protective layer to be 5% by mass or more and 15% by mass or less, and is more preferable to be 7% by mass or more and 12% by mass or less, from the viewpoints of the enhancement of the uniformity of dispersion of the fluorine atom-containing resin particles and the enhancement of the abrasion resistance.

Commercially available products of the guanamine compound include Super Bekamine L-148-55, Super Bekamine 13-535, Super Bekamine L-145-60, Super Bekamine TD-126 (any one produced by DIC Corporation), Nikalac BL-60 and Nikalac BX-4000 (any one produced by Sanwa Chemical Co., Ltd.).

Commercially available products of the melamine compound include Super Melami No. 90 (produced by NOF Corporation), Super Bekamine TD-139-60 (produced by DIC Corporation), U-VAN 2020 (produced by Mitsui Chemicals, Inc.), Smitex resin M-3 (produced by Sumitomo Chemical Industry Company Limited), and Nikalac MW-30 (produced by Sanwa Chemical Co., Ltd.).

<Surface working of electrophotographic photosensitive member>

In the present disclosure, the surface of the electrophotographic photosensitive member may be worked. Due to the surface being worked, the electrophotographic photosensitive member can further stabilize a behavior of a cleaning unit (cleaning blade) which is brought into contact with itself. Examples of the surface working method include: a method of pressing a mold having salient portions against the surface of the electrophotographic photosensitive member, and transferring the shape; a method of giving an uneven shape by mechanical polishing; and a method of roughening the surface of the electrophotographic photosensitive member by causing a powder to collide with the surface. The salient portions or the recess portions which are provided on the surface layer of the electrophotographic photosensitive member in this way can further stabilize the behavior of the cleaning unit which is brought into contact with the electrophotographic photosensitive member.

The above recess portions or the salient portions may be formed on the whole surface of the electrophotographic photosensitive member, or may be formed on one part of the surface of the electrophotographic photosensitive member. When the recess portions or salient portions are formed on a part of the surface of the electrophotographic photosensitive member, it is preferable that the recess portions or the salient portions are formed at least on the whole contact area with the cleaning unit (cleaning blade).

When the recess portions are formed, the recess portions can be formed on the surface of the electrophotographic photosensitive member by pressing the mold having salient portions corresponding to the recess portions, against the surface of the electrophotographic photosensitive member and transferring the shape.

<Polishing tool to be used for mechanical polishing>

The mechanical polishing can employ a known unit. Generally, the surface of the electrophotographic photosensitive member is polished by bringing a polishing tool into contact with the electrophotographic photosensitive member, and relatively moving any one or both of the tool and the member. The polishing tool is a polishing member in which the layer is provided on a base material, in which polishing abrasive grains are dispersed in a binding resin.

Examples of the abrasive grains include particles of aluminum oxide, chromium oxide, diamond, iron oxide, cerium oxide, corundum, calcite, silicon nitride, boron nitride, molybdenum carbide, silicon carbide, tungsten carbide, titanium carbide and silicon oxide. It is preferable for a particle size of the abrasive grain to be 0.01 $\mu$m or larger and 50 $\mu$m or smaller, and is more preferable to be 1 $\mu$m or larger and 15 $\mu$m or smaller. When the particle size of the abrasive grain is too small, a polishing force becomes weak, and an F/C ratio that is a molar fraction ratio of a fluorine atom F to a carbon atom C by X-ray photoelectron spectroscopy of the surface layer, on the outermost surface of the electrophotographic photosensitive member, is difficult to be increased. These abrasive grains may be used alone or in a mixed form of two or more types thereof. When two or more types are mixed, the materials and particle sizes may be different or the same.

The binding resin for dispersing the abrasive grains therein which are used in the polishing tool can employ known thermoplastic resins, thermosetting resins, reactive type resins, electron beam curing resins, ultraviolet curing resins, visible light curing resins, and antifungal resins. Examples of the thermoplastic resins include a vinyl chloride resin, a polyamide resin, a polyester resin, a polycarbonate resin, an amino resin, a styrene-butadiene copolymer, a urethane elastomer and a polyamide-silicone resin. Examples of the thermosetting resins include a phenol resin, a phenoxy resin, an epoxy resin, a polyurethane resin, a polyester resin, a silicone resin, a melamine resin and an alkyd resin. In addition, an isocyanate-based curing agent may be added to the thermoplastic resin.

It is preferable that a film thickness of a layer obtained by dispersing abrasive grains in the binding resin of the

polishing tool is 1 μm or larger and 100 μm or smaller. If the film thickness is too thick, the film thickness tends to easily become uneven, and as a result, the surface roughness of the electrophotographic photosensitive member becomes uneven that is an object to be polished, which becomes a problem. On the other hand, if the film thickness is too thin, the abrasive grains tend to easily fall off.

The shape of the base material of the polishing tool is not particularly limited. In Examples of the present disclosure, a sheet-shaped base material has been used so that the cylindrical electrophotographic photosensitive member is efficiently polished, but other shapes may be used. (Hereinafter, the polishing tool of the present disclosure is also referred to as a "polishing sheet".) The material of the base material of the polishing tool is not also particularly limited. Examples of the material of the sheet-shaped base material include paper, woven fabric, nonwoven fabric and plastic film.

The polishing tool can be obtained by applying a paint in which the above abrasive grains, the binding resin and a solvent that can dissolve the binding resin are mixed and dispersed, onto the base material, and drying the paint.

<Polishing apparatus>

FIG. 2 illustrates one example of a polishing apparatus for an electrophotographic photosensitive member of the present disclosure.

FIG. 2 illustrates an apparatus for polishing a cylindrical electrophotographic photosensitive member, with the use of a polishing sheet. In FIG. 2, a polishing sheet 2-1 is wound around a hollow shaft 2-6, and a motor (not illustrated) is arranged to the shaft 2-6 so that a tension is given to the polishing sheet 2-1 in a direction opposite to a direction in which the polishing sheet 2-1 is fed. The polishing sheet 2-1 is fed in the arrow direction, passes through a backup roller 2-3 via guide rollers 2-2a and 2-2b, and the polishing sheet 2-1 after polishing is wound by a winding unit 2-5 by a motor (not illustrated) via guide rollers 2-2c and 2-2d. When polishing is performed, the polishing sheet 2-1 is always pressed against an object to be treated (electrophotographic photosensitive member before being polished)2-4. The polishing sheet 2-1 has an insulating property in many cases, and accordingly, it is preferable to use a material which is grounded or has electroconductivity, at portions in contact with the polishing sheet 2-1.

A feed speed of the polishing sheet 2-1 is preferably in a range of 10 to 1000 mm/min. When a feed amount is small, the binding resin adheres to the surface of the polishing sheet 2-1, and a deep damage is formed on the surface of the object 2-4 to be treated due to the adhesion, in some cases.

The object 2-4 to be treated is placed at a position opposed to the backup roller 2-3 through the polishing sheet 2-1. It is preferable that the backup roller 2-3 is an elastic body, from the viewpoint of enhancing the uniformity of the surface roughness of the object 2-4 to be treated. At this time, the object 2-4 to be treated and the backup roller 2-3 are pressed against each other at a desired set value for a predetermined period of time through the polishing sheet 2-1, and the surface of the object 2-4 to be treated is polished. A rotation direction of the object 2-4 to be treated may be the same as or opposite to the direction in which the polishing sheet 2-1 is fed. In addition, the rotation direction may be changed during the polishing.

The pressing pressure of the backup roller 2-3 against the object 2-4 to be treated depends on the hardness of the backup roller 2-3 and the polishing period of time, but is preferably 0.005 to 15 $N/m^2$.

The surface roughness of the electrophotographic photosensitive member can be adjusted by appropriately selecting the feed speed of the polishing sheet 2-1, the pressing pressure of the backup roller 2-3, the type of the abrasive grain of the polishing sheet, the film thickness of the binder resin of the polishing sheet, the thickness of the base material, and the like.

<Measurement of maximum height Rmax in JIS B06011982>

The surface roughness of the electrophotographic photosensitive member can be measured by a known unit. Examples thereof include the following units.

A surface roughness meter such as Surfcorder SE3500 which is a surface roughness measuring instrument manufactured by Kosaka Laboratory Ltd. Micromap 557N which is a non-contact three-dimensional surface measuring instrument manufactured by Mitsubishi Chemical Systems, Inc. Microscopes which can obtain a three-dimensional shape such as ultra-deep shape measurement microscopes VK-8550 and VK-9000 manufactured by Keyence Corporation.

In the present disclosure, among indexes of the surface roughness, the maximum height Rmax in JIS B06011982 is used as the polishing depth L (μm), which is defined by Japan Industrial Standard JIS. In addition, in the present disclosure, Rmax is measured in advance in a range of a 5 mm square section of an electrophotographic photosensitive member, which is cut out as a sample for an X-ray photoelectron spectroscopy that will be described later. Arbitrary three portions in the range of the cut out 5 mm square of the electrophotographic photosensitive member are subjected to the measurement, and the average value is adopted as a polishing depth L (μm).

<Process cartridge and electrophotographic apparatus>

The electrophotographic photosensitive member of the present disclosure may be one of components of a process cartridge or an electrophotographic apparatus. A process cartridge integrally supports the electrophotographic photosensitive member described hitherto, and at least one unit selected from the group consisting of a charging unit, a developing unit, a transfer unit and a cleaning unit; and is detachably attachable to a main body of an electrophotographic apparatus. In addition, the electrophotographic apparatus includes the electrophotographic photosensitive member described hitherto, a charging unit, an exposure unit, a developing unit and a transfer unit.

FIG. 3 illustrates a configuration of a process cartridge equipped with the electrophotographic photosensitive member of the present disclosure; and FIG. 4 illustrates one example of a schematic configuration of an electrophotographic apparatus including the process cartridge of FIG. 3.

In FIG. 3, a cylindrical electrophotographic photosensitive member 1 is rotationally driven at a predetermined peripheral velocity in the arrow direction. The peripheral surface of the electrophotographic photosensitive member 1 which is rotationally driven is uniformly electrostatically charged to a predetermined positive or negative potential by a charging unit 2. Subsequently, the charged peripheral surface of the electrophotographic photosensitive member 1 receives exposure light (image exposure light) 3 which is output from an exposure unit (not illustrated) such as slit exposure or laser beam scanning exposure. Thus, electrostatic latent images corresponding to a target image are sequentially formed on the peripheral surface of the electrophotographic photosensitive member 1. As the voltage to be applied to the charging unit (charging roller or the like) 2, any one of a voltage obtained by superimposing an AC component on a DC component or a voltage of only a DC component may be used.

The electrostatic latent image formed on the peripheral surface of the electrophotographic photosensitive member 1 is developed by a toner which is contained in a developer of the developing unit 4, and becomes a toner image. Subsequently, the toner image formed and carried on the peripheral surface of the electrophotographic photosensitive member 1 is sequentially transferred onto a transfer material (paper, intermediate transfer body or the like) 6 by a transfer bias applied from a transfer unit (transfer roller or the like) 5. The transfer material 6 is fed in synchronization with the rotation of the electrophotographic photosensitive member 1.

After the transfer of the toner image, the surface of the electrophotographic photosensitive member 1 is submitted to diselectrification by a pre-exposure light 7 emitted from a pre-exposure unit (not illustrated), then a transfer residual toner thereon is removed by a cleaning unit 8, and thereby the resultant surface is cleaned. The electrophotographic photosensitive member 1 is repeatedly used for image formation. The pre-exposure unit may be set before or after the cleaning process, and the pre-exposure unit is not necessarily required.

The electrophotographic photosensitive member 1 may be mounted on an electrophotographic apparatus such as a copying machine or a laser beam printer. In addition, the process cartridge 9 may be configured to accommodate a plurality of components in the components of the electrophotographic photosensitive member 1, the charging unit 2, the developing unit 4 and the cleaning unit 8, in a container, and to integrally support the plurality of components; and be configured to be freely attachable to and detachable from the main body of the electrophotographic apparatus. In FIG. 3, the process cartridge 9 is configured to integrally support the electrophotographic photosensitive member 1, the charging unit 2, the developing unit 4 and the cleaning unit 8, and be freely attachable to and detachable from the main body of the electrophotographic apparatus.

Next, the electrophotographic apparatus will be described that includes the electrophotographic photosensitive member of the present disclosure.

FIG. 4 illustrates one example of a configuration of the electrophotographic apparatus of the present disclosure. Process cartridges are juxtaposed along an intermediate transfer body 10, which are a process cartridge 17 for a yellow color, a process cartridge 18 for a magenta color, a process cartridge 19 for a cyan color, and a process cartridge 20 for a black color, which correspond to the respective colors of the yellow color, the magenta color, the cyan color and the black color. A diameter and a constituent material of the electrophotographic photosensitive member, a developer, a charging method and other units do not necessarily need to be unified for each color.

When the image forming operation starts, the toner images of the respective colors are sequentially superimposed on the intermediate transfer body 10, according to the above described image forming process. In parallel, a transfer paper 11 is fed from a paper feed tray 13 through a paper feeding path 12, and is fed to a secondary transfer unit 14, at the same timing as a rotation movement of the intermediate transfer body. A toner image on the intermediate transfer body 10 is transferred to the transfer paper 11 by a transfer bias applied from the secondary transfer unit 14. The toner image transferred onto the transfer paper 11 is conveyed along the paper feeding path 12, and is fixed onto the transfer paper by a fixing unit 15; and the resultant paper is ejected from a paper ejecting part 16.

The electrophotographic photosensitive member of the present disclosure can be used in a laser beam printer, an LED printer, a copying machine, a facsimile machine, a combined machine thereof and the like.

[Examples]

The present disclosure will be described in more detail below with reference to Examples and Comparative Examples, but the present disclosure is not limited thereto. Herein, "part(s)" in the description of the following Examples is based on mass unless otherwise specified.

<Synthesis of polymer A having structural unit represented by formula (1)>

The polymer A having the structural unit represented by the formula (1) (hereinafter, also referred to as "graft copolymer") in the present disclosure was synthesized in the following way. For information, an acrylate compound and a macromonomer compound which were used in the following synthesis examples can be produced, for example, by referring to Japanese Patent Application Laid-Open No. 2009-104145.

(Graft copolymer 1)

In a glass flask equipped with a stirrer, a reflux condenser, a nitrogen gas introduction pipe, a thermostatic chamber and a thermometer, 50 parts of 1H,1H-perfluoro(6-oxadecanoyl) acrylate (produced by Sigma-Aldrich Co. LLC), 75 parts of a macromonomer (number average molecular weight of 6,000) represented by the following formula (A-1): 0.437 parts of 1,1'-azobis(1-acetoxy-1-phenylethane) (trade name: OT AZO-15, produced by Otsuka Chemical Co., Ltd.), and 338 parts of n-butyl acetate were mixed under a nitrogen atmosphere at 20°C for 30 minutes, then the reaction liquid was heated so as to become 85 to 90°C, and was subjected to the reaction for 5 hours. The reaction was stopped by ice cooling, 1500 parts by mass of 2-propanol was added thereto, and a precipitate was obtained. The precipitate was cleaned by a mixed solvent of n-butyl acetate: 2-propanol =1 :5, then the resultant precipitate was dried at a temperature of 80°C in a state of a reduced pressure of 1325 Pa or less for 3 hours, and a graft copolymer 1 was obtained.

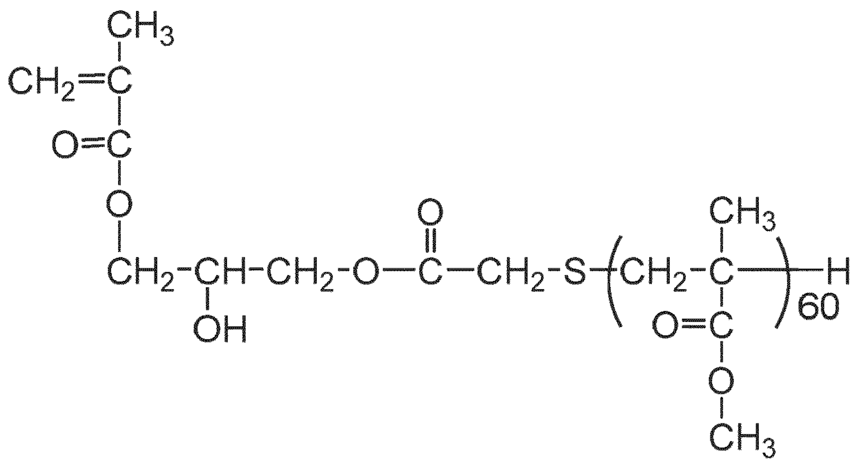

(A-1)

(Graft copolymer 2)

A graft copolymer 2 was obtained in the same way as the graft copolymer 1, except that an amount of the 1,1'-azobis(1-acetoxy-1-phenylethane) was changed to 0.819 parts.

(Graft copolymer 3)

A graft copolymer 3 was obtained in the same way as the graft copolymer 1, except that an amount of the 1,1'-azobis(1-acetoxy-1-phenylethane) was changed to 0.728 parts.

(Graft copolymer 4)

A graft copolymer 4 was obtained in the same way as the graft copolymer 1, except that an amount of the 1,1'-azobis(1-acetoxy-1-phenylethane) was changed to 0.164 parts.

(Graft copolymer 5)

A graft copolymer 5 was obtained in the same way as the graft copolymer 1, except that an amount of the 1,1'-azobis(1-acetoxy-1-phenylethane) was changed to 0.131 parts.

(Graft copolymer 6)

A graft copolymer 6 was obtained in the same way as the graft copolymer 1, except that an amount of the 1,1'-azobis(1-acetoxy-1-phenylethane) was changed to 0.119 parts.

(Graft copolymer 7)

A graft copolymer 7 was obtained in the same way as the graft copolymer 1, except that an amount of the 1,1'-azobis(1-acetoxy-1-phenylethane) was changed to 0.874 parts.

(Graft copolymer 8)

A graft copolymer 8 was obtained in the same way as the graft copolymer 1, except that the acrylate and the macromonomer were changed to 25 parts of 1H,1H-perfluoro(6-oxanonanoyl) acrylate and 300 parts of macromonomer AA-6, respectively.

(Graft copolymer 9)

A graft copolymer 9 was obtained in the same way as the graft copolymer 1, except that the acrylate and the macromonomer were changed to 35 parts of 1H,1H-perfluoro(6-oxanonanoyl) acrylate and 180 parts of the macromonomer AA-6, respectively.

(Graft copolymer 10)

A graft copolymer 10 was obtained in the same way as the graft copolymer 1, except that the acrylate and the macromonomer were changed to 56.25 parts of 1H,1H-perfluoro(6-oxanonanoyl) acrylate and 75 parts of the macromonomer AA-6, respectively.

(Graft copolymer 11)

A graft copolymer 11 was obtained in the same way as the graft copolymer 1, except that the acrylate and the macromonomer were changed to 20 parts of 1H,1H-perfluoro(6-oxanonanoyl) acrylate and 360 parts of the macromonomer AA-6, respectively.

(Graft copolymer 12)

A graft copolymer 12 was obtained in the same way as the graft copolymer 1, except that the acrylate and the macromonomer were changed to 50 parts of 1H,1H-perfluoro(6-oxanonanoyl) acrylate and 30 parts of the macromonomer AA-6, respectively.

(Graft copolymer 13)

A graft copolymer 13 was obtained in the same way as the graft copolymer 1, except that 1H,1H-perfluoro(6-oxadecanoyl) acrylate was changed to 40 parts of 1H,1H-perfluoro(3-dimethyl-4-oxaheptanoyl) acrylate, and that the macromonomer was changed to 30 parts of the macromonomer AA-6.

(Graft copolymer 14)

A graft copolymer 14 was obtained in the same way as the graft copolymer 1, except that 1H,1H-perfluoro(6-oxadecanoyl) acrylate was changed to 55 parts of 1H,1H-perfluoro(6-oxaundecanoyl) acrylate, and that the macromonomer was changed to 30 parts of the macromonomer AA-6.

(Graft copolymer 15)

A graft copolymer 15 was obtained in the same way as the graft copolymer 1, except that 1H,1H-perfluoro(6-oxadecanoyl) acrylate was changed to 60 parts of 1H,1H-perfluoro(7-oxadodecanoyl) acrylate, and that the macromonomer was changed to 30 parts of the macromonomer AA-6.

(Graft copolymer 16)

A graft copolymer 16 was obtained in the same way as the graft copolymer 1, except that 1H,1H-perfluoro(6-oxadecanoyl) acrylate was changed to 60 parts of 1H,1H,2H,2H-perfluoro(8-oxatridecanoyl) acrylate, and that the macromonomer was changed to 75 parts of the macromonomer AA-6.

(Graft copolymer 17)

A graft copolymer 17 was obtained in the same way as the graft copolymer 1, except that 1H,1H-perfluoro(6-oxadecanoyl) acrylate was changed to 45 parts of 1H,1H-perfluoro(3-dimethyl-4-oxaoctanoyl) acrylate, and that the macromonomer was changed to 75 parts of the macromonomer AA-6.

(Graft copolymer 18)

A graft copolymer 18 was obtained in the same way as the graft copolymer 1, except that 1H,1H-perfluoro(6-oxadecanoyl) acrylate was changed to 45 parts of 1H,1H-perfluoro(2-dimethyl-3-oxaoctanoyl) acrylate, and that the macromonomer was changed to 75 parts of the macromonomer AA-6.

(Graft copolymer 19)

A graft copolymer 19 was obtained in the same way as the graft copolymer 1, except that 1H,1H-perfluoro(6-oxadecanoyl) acrylate was changed to 45 parts of 1H,1H-perfluoro(8-oxanonanoyl) acrylate, and that the macromonomer was changed to 75 parts of the macromonomer AA-6.

(Graft copolymer 20)

A graft copolymer 20 was obtained in the same way as the graft copolymer 1, except that 1H,1H-perfluoro(6-oxadecanoyl) acrylate was changed to 45 parts of 1H,1H-perfluoro(3-oxanonanoyl) acrylate, and that the macromonomer was changed to 75 parts of the macromonomer AA-6.

(Graft copolymer 21)

A graft copolymer 21 was obtained in the same way as the graft copolymer 1, except that 1H,1H-perfluoro(6-oxadecanoyl) acrylate was changed to 35 parts of 1H,1H-perfluoro(2-dimethyl-3-oxahexanoyl) acrylate, and that the macromonomer was changed to 75 parts of the macromonomer AA-6.

(Graft copolymer 22)

A graft copolymer 22 was obtained in the same way as the graft copolymer 1, except that 1H,1H-perfluoro(6-oxadecanoyl) acrylate was changed to 35 parts of 1H,1H-perfluoro(2-oxaheptanoyl) acrylate, and that the macromonomer was changed to 75 parts of the macromonomer AA-6.

(Graft copolymer 23)

A graft copolymer 23 was obtained in the same way as the graft copolymer 1, except that 1H,1H-perfluoro(6-oxadecanoyl) acrylate was changed to 50 parts of 1H,1H,2H,2H,3H,3H-perfluoro(5-dimethyl-6-oxadecanoyl) acrylate, and that the macromonomer was changed to 75 parts of the macromonomer AA-6.

The obtained graft copolymers 1 to 23 were subjected to GPC measurement by the method described above, and the respective weight average molecular weights were calculated. The results are shown in Table 3.

[Table 3]

Table 3

| Number of graft copolymer | Unit structure represented by formula (1) | | | | | Result of GPC measurement |
|---|---|---|---|---|---|---|
| | $R^{11}$ | $R^{12}$ | $Rf^1$ | $Rf^2$ | Sum of the number of carbon atoms of $Rf^1$ and $Rf^2$ | Weight average molecular weight |
| 1 | $-H$ | $-CH_2-$ | $-CF_2-CF_2-CF_2-CF_2-$ | $-CF_2-CF_2-CF_2-CF_3$ | 8 | 31879 |
| 2 | $-H$ | $-CH_2-$ | $-CF_2-CF_2-CF_2-CF_2-$ | $-CF_2-CF_2-CF_2-CF_3$ | 8 | 16040 |
| 3 | $-H$ | $-CH_2-$ | $-CF_2-CF_2-CF_2-CF_2-$ | $-CF_2-CF_2-CF_2-CF_3$ | 8 | 18100 |
| 4 | $-H$ | $-CH_2-$ | $-CF_2-CF_2-CF_2-CF_2-$ | $-CF_2-CF_2-CF_2-CF_3$ | 8 | 80030 |
| 5 | $-H$ | $-CH_2-$ | $-CF_2-CF_2-CF_2-CF_2-$ | $-CF_2-CF_2-CF_2-CF_3$ | 8 | 101279 |
| 6 | $-H$ | $-CH_2-$ | $-CF_2-CF_2-CF_2-CF_2-$ | $-CF_2-CF_2-CF_2-CF_3$ | 8 | 113279 |
| 7 | $-H$ | $-CH_2-$ | $-CF_2-CF_2-CF_2-CF_2-$ | $-CF_2-CF_2-CF_2-CF_3$ | 8 | 15341 |
| 8 | $-H$ | $-CH_2-$ | $-CF_2-CF_2-CF_2-CF_2-$ | $-CF_2-CF_2-CF_2-CF_3$ | 8 | 14687 |
| 9 | $-H$ | $-CH_2-$ | $-CF_2-CF_2-CF_2-CF_2-$ | $-CF_2-CF_2-CF_2-CF_3$ | 8 | 14897 |
| 10 | $-H$ | $-CH_2-$ | $-CF_2-CF_2-CF_2-CF_2-$ | $-CF_2-CF_2-CF_2-CF_3$ | 8 | 14963 |
| 11 | $-H$ | $-CH_2-$ | $-CF_2-CF_2-CF_2-CF_2-$ | $-CF_2-CF_2-CF_2-CF_3$ | 8 | 15350 |
| 12 | $-H$ | $-CH_2-$ | $-CF_2-CF_2-CF_2-CF_2-$ | $-CF_2-CF_2-CF_2-CF_3$ | 8 | 15140 |
| 13 | $-H$ | $-CH_2-$ | $-CF_2-CF-$<br>$CF_3$ | $-CF_2-CF_2-CF_3$ | 6 | 14760 |
| 14 | $-H$ | $-CH_2-$ | $-CF_2-CF_2-CF_2-CF_2-$ | $-CF_2-CF_2-CF_2-CF_2-CF_3$ | 9 | 15386 |
| 15 | $-H$ | $-CH_2-$ | $-CF_2-CF_2-CF_2-CF_2-CF_2-$ | $-CF_2-CF_2-CF_2-CF_2-CF_3$ | 10 | 14873 |
| 16 | $-H$ | $-CH_2-CH_2-$ | $-CF_2-CF_2-CF_2-CF_2-CF_2-$ | $-CF_2-CF_2-CF_2-CF_2-CF_3$ | 10 | 15430 |
| 17 | $-H$ | $-CH_2-$ | $-CF_2-CF-$<br>$CF_3$ | $-CF_2-CF_2-CF_2-CF_3$ | 7 | 30570 |
| 18 | $-H$ | $-CH_2-$ | $-CF-$<br>$CF_3$ | $-CF_2-CF_2-CF_2-CF_2-CF_3$ | 7 | 29889 |
| 19 | $-H$ | $-CH_2-$ | $-CF_2-CF_2-CF_2-CF_2-CF_2-CF_2-$ | $-CF_3$ | 7 | 30548 |
| 20 | $-H$ | $-CH_2-$ | $-CF_2-$ | $-CF_2-CF_2-CF_2-CF_2-CF_2-CF_3$ | 7 | 32143 |
| 21 | $-H$ | $-CH_2-$ | $-CF-$<br>$CF_3$ | $-CF_2-CF_2-CF_3$ | 5 | 31931 |
| 22 | $-H$ | $-CH_2-$ | | $-CF_2-CF_2-CF_2-CF_2-CF_3$ | 5 | 31760 |
| 23 | $-H$ | $-CH_2-CH_2-CH_2-$ | $-CF_2-CF-$<br>$CF_3$ | $-CF_2-CF_2-CF_2-CF_3$ | 7 | 29853 |

<Production of electrophotographic photosensitive member>

[Example 1-1]

(Support 1)

A cylindrical aluminum cylinder (JIS-A3003, aluminum alloy, having outer diameter of 30.6 mm, length of 370 mm and thickness of 1 mm) was subjected to cutting work and the resultant cylinder was used as a support (electroconductive support). Ultrasonic cleaning in a cleaning liquid containing a detergent (trade name: Chemicol CT, produced by Tokiwa Chemical Industries Co., Ltd.) dissolved in pure water was performed, and then the cleaning liquid was washed away; and further ultrasonic cleaning in pure water was performed and degreasing treatment was performed, to obtain a support 1.

(Undercoat layer 1)

One hundred parts of zinc oxide particle (specific surface area: 19 $m^2/g$, and powder resistance: $4.7\times10^6\ \Omega\cdot cm$) was mixed with 500 parts of toluene while being stirred; and to this mixture, 0.8 parts of a silane coupling agent (compound

name: N-2-(aminoethyl)-3-aminopropylmethyldimethoxy silane, and trade name: KBM602, produced by Shin-Etsu Chemical Co., Ltd.) was added, and the mixture was stirred for 6 hours. After that, toluene was distilled off under reduced pressure, and the resultant was heated and dried at 130°C for 6 hours; and a surface-treated zinc oxide particle A was obtained.

Subsequently, as a polyol, 15 parts of butyral (trade name: BM-1, Sekisui Chemical Co., Ltd.), and 15 parts of blocked isocyanate (trade name: Duranate TPA-B80E, non-volatile content of 80% by mass, produced by Asahi Kasei Chemicals Corp.) were dissolved in a mixed solvent of 73.5 parts of methyl ethyl ketone and 73.5 parts of 1-butanol. To this solution, 80.8 parts of the surface-treated zinc oxide particle A and 0.81 parts of 2,3,4-trihydroxybenzophenone (produced by Tokyo Chemical Industry Co., Ltd.) were added, and the mixture was dispersed in a sand mill apparatus which used glass beads having a diameter of 0.8 mm, under an atmosphere of 23±3°C for 3 hours.

After the dispersion treatment, 0.01 parts of silicone oil (trade name: SH28PA, produced by Dow Coming Toray Co., Ltd. (old: Dow Corning Toray Silicone Co., Ltd.)), 5.6 parts of a crosslinked polymethyl methacrylate (PMMA) particle (trade name: Techpolymer SSX-103, produced by Sekisui Kasei Co., Ltd., and average size of primary particles: 3 μm) were added thereto, the mixture was stirred, and a coating liquid for an undercoat layer was prepared.

The support 1 was dip-coated with the obtained coating liquid for the undercoat layer to have a coating film formed thereon, the coating film was dried at 160°C for 30 minutes, and an undercoat layer 1 was formed which had a film thickness of 18 μm.

(Charge generation layer 1)

Four parts of hydroxygallium phthalocyanine crystal (charge generation substance) having a form of a crystal which had strong peaks at 7.4° and 28.1° at a Bragg angle of 2θ±0.2° in CuKα characteristic X-ray diffraction, and 0.04 parts of a chemical compound represented by the following formula (E) were added to a liquid which was obtained by dissolving 2 parts of polyvinyl butyral (trade name: S-LEC BX -1, produced by Sekisui Chemical Co., Ltd.) in 100 parts of cyclohexanone. After that, the resultant liquid was subjected to dispersion treatment in a sand mill which used glass beads having a diameter of 1 mm, in an atmosphere of 23±3°C for 1 hour, and after the dispersion treatment, 100 parts of ethyl acetate was added thereto; and a coating liquid for the charge generation layer was prepared.

The undercoat layer 1 was dip-coated with the coating liquid for the charge generation layer, and the obtained coating film was dried at 90°C for 10 minutes; and thereby, a charge generation layer 1 was formed which had a film thickness of 0.15 μm.

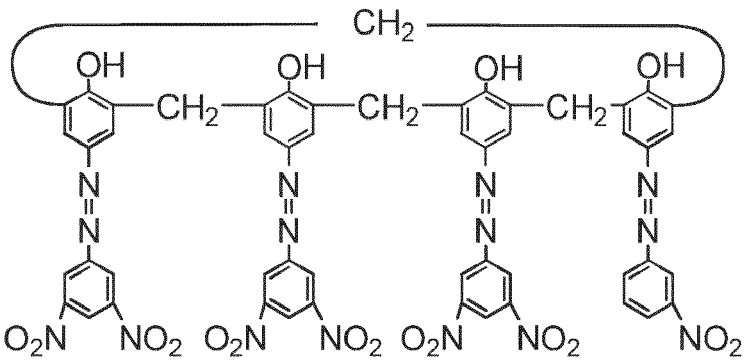

(E)

(Charge transport layer 1)

A coating liquid for a charge transport layer was prepared by dissolving 60 parts of a chemical compound represented by the following formula (F), 30 parts of a chemical compound represented by the following formula (G), 10 parts of a chemical compound represented by the following formula (H), 100 parts of a bisphenol Z type polycarbonate resin (trade name: Iupilon Z400, produced by Mitsubishi Engineering-Plastics Corporation), and 0.2 parts of polycarbonate (viscosity average molecular weight Mv: 20000) having a unit represented by the following formula (I), into a mixed solvent of 272 parts of o-xylene, 256 parts of methyl benzoate and 272 parts of dimethoxymethane.

The charge generation layer 1 was dip-coated with this coating liquid for the charge transport layer to have a coating film formed thereon, and the obtained coating film was dried at 115°C for 50 minutes; and a charge transport layer 1 was formed which had a film thickness of 18 μm.

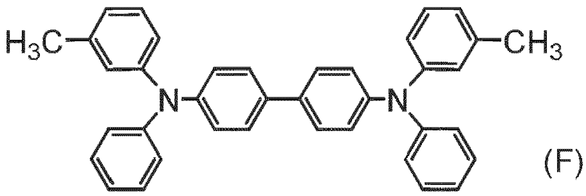

(F)

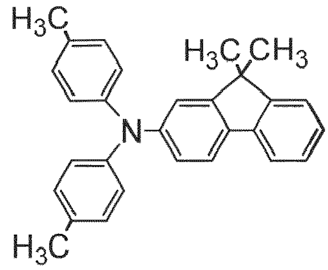

(G)

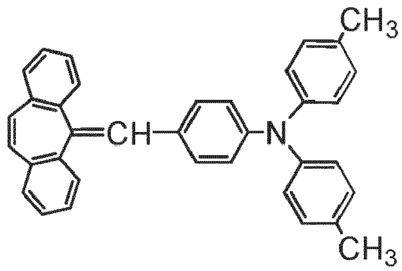

(H)

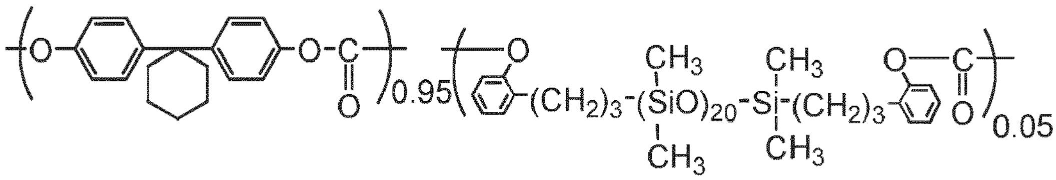

(I)

(In the formula (I), 0.95 and 0.05 represent a molar ratio (copolymerization ratio) between two units.)

(Protective layer 1)

A solution of a dispersing agent was prepared by dissolving 2.20 parts of the previously described graft copolymer 1, in a mixed solvent formed of 100 parts of 1,1,2,2-tetrafluoroethyl-2,2,2-trifluoroethyl ether (trade name: AE-3000, produced by AGC Inc.) and 100 parts of 1-propanol.

To the obtained dispersing agent solution, 40 parts of a polytetrafluoroethylene resin particle (average size of primary particles of 210 nm, and average circularity of 0.85) were added. Then, the mixture was passed through a high-pressure dispersing machine (trade name: Microfluidizer M-110EH, manufactured by Microfluidics Co., Ltd. U.S.), and a dispersion liquid of polytetrafluoroethylene resin particles was obtained.

To the obtained dispersion liquid of the polytetrafluoroethylene resin particles, 75.4 parts of a hole transporting compound represented by the following formula (K), 21.9 parts of a chemical compound represented by the following formula (D), and 100 parts of 1-propanol were added. After that, the resultant mixture was filtered through a polyflon filter (trade name: PF-040, manufactured by Advantec Toyo Kaisha, Ltd.), and a dispersion liquid of a polytetrafluoroethylene resin particle (coating liquid for protective layer) was prepared.

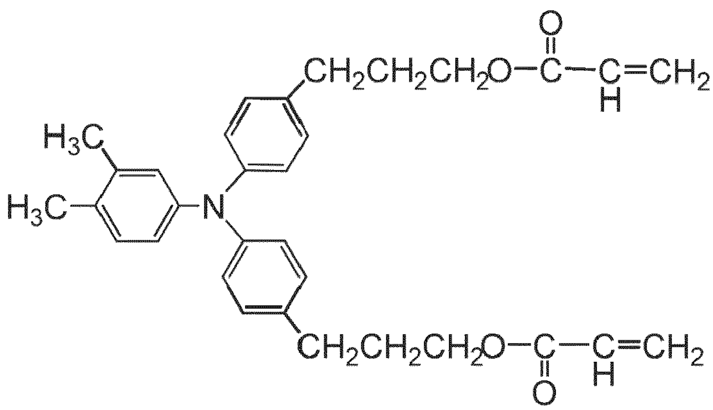

(K)

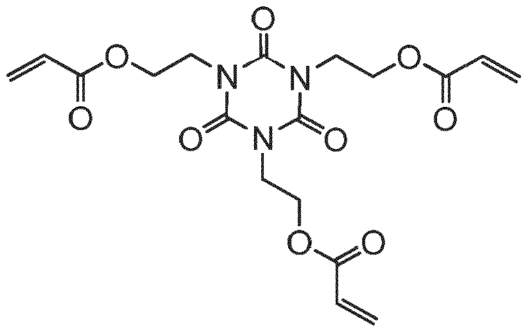

(D)

The charge transport layer was dip-coated with this coating liquid for the protective layer to have a coating film formed thereon, and the obtained coating film was dried at 40°C for 5 minutes. After drying, the coating film was irradiated with an electron beam under a nitrogen atmosphere, under conditions of an acceleration voltage of 70 kV and an absorption dose of 15 kGy, for 1.6 seconds. After that, the coating film was subjected to heat treatment under a nitrogen atmosphere, under the condition that the temperature of itself became 135°C, for 15 seconds. Note that an oxygen concentration was 15 ppm in a period from the irradiation with an electron beam to the heat treatment for 15 seconds. Next, the coating film was naturally cooled to a temperature of 25°C in the atmosphere, and then was subjected to heat treatment for 1 hour under the condition that the coating film became 105°C; and a surface layer (protective layer 1) was formed which had a film thickness of 5 μm.

For information, the content of 1,1,2,2-tetrafluoroethyl-2,2,2-trifluoroethyl ether in the surface layer was 5 ppm.

Thus, an electrophotographic photosensitive member was produced which had a support and a surface layer before the surface is polished.

<Surface working of electrophotographic photosensitive member>

(Polishing of electrophotographic photosensitive member before surface polishing)

The surface of the electrophotographic photosensitive member was polished, before the surface shape was formed. The surface was polished under the following conditions, with the use of the polishing apparatus illustrated in FIG. 2.

Feed speed of the polishing sheet; 400 mm/min
Number of rotations of electrophotographic photosensitive member; 450 rpm
Push-in distance of the electrophotographic photosensitive member into the backup roller; 3.5 mm
Rotation directions of polishing sheet and electrophotographic photosensitive member; with
Backup roller; outer diameter of 100 mm, and asker C hardness of 25
The polishing sheet A to be mounted on the polishing apparatus was produced by the mixture of the polishing abrasive grains which are used in GC3000 and GC2000 produced by Riken Corundum Co., Ltd.
GC3000 (where surface roughness Ra of polished sheet is 0.83 μm)
GC2000 (where surface roughness Ra of polished sheet is 1.45 μm)
Polishing sheet A (where surface roughness Ra of polished sheet is 1.12 μm)
A period of time of polishing with the use of the polishing sheet A was determined to be 20 seconds.

(Measurement of polishing depth L (μm))

The maximum height Rmax of the electrophotographic photosensitive member after having been polished was measured according to JIS B06011982 with the use of a surface roughness measuring instrument Surfcorder SE3500 which is manufactured by Kosaka Laboratory Co., Ltd. The measurement conditions were set as follows. Arbitrary three portions in a range of a 5 mm square of the electrophotographic photosensitive member after having been polished were subjected to the measurement, and the average value was adopted as a polishing depth L (μm). The polishing depth L of the electrophotographic photosensitive member after the surface was polished was 0.75 μm. Furthermore, in Examples 1-2 to 1-27 and Comparative Examples 1-1 to 1-5 which would be described later, the polishing depths L of the electrophotographic photosensitive members which were subjected to the surface working were all 0.75 μm.

(Measurement conditions)

Detector: R2μm
Probe: diamond needle of 0.7 mN
Filter: 2CR
Cut-off value: 0.08 mm
Measurement length: 2.5 mm
Feed speed: 0.1 mm

[Examples 1-2 to 1-5]

An electrophotographic photosensitive member was produced in the same way as in Example 1-1, except that when the protective layer was formed, the average size of primary particles and average circularity of the polytetrafluoroethylene particle were changed as shown in Table 4. The content of 1,1,2,2-tetrafluoroethyl-2,2,2-trifluoroethyl ether in the surface layer is shown in Table 4.

[Examples 1-6 to 1-9]

An electrophotographic photosensitive member was produced in the same way as in Example 1-1, except that when the protective layer was formed, the parts by mass of the graft copolymer 1 were changed as shown in Table 4. The content of 1,1,2,2-tetrafluoroethyl-2,2,2-trifluoroethyl ether in the surface layer is shown in Table 4.

[Examples 1-10 to 1-24, Examples 1-26 to 1-27, and Comparative Examples 1-1 to 1-5.]

An electrophotographic photosensitive member was produced in the same way as in Example 1-1, except that when the protective layer was formed, the graft copolymer 1 was changed to the graft copolymer shown in Table 4. The content of 1,1,2,2-tetrafluoroethyl-2,2,2-trifluoroethyl ether in the surface layer is shown in Table 4.

[Example 1-25]

An electrophotographic photosensitive member was produced in the same way as in Example 1-1, except that when the protective layer was formed, a coating liquid for the protective layer was prepared under the following conditions.

A dispersing agent solution was prepared by dissolving 2.2 parts of a graft copolymer 1 into 80 parts of tetrahydrofuran which served as a solvent.

To the obtained dispersing agent solution, 31 parts of a polytetrafluoroethylene resin particle (average size of primary particles of 210 nm, and average circularity of 0.85) were added. Then, the mixture was passed through a high-pressure dispersing machine (trade name: Microfluidizer M-110EH, manufactured by Microfluidics Co., Ltd. U.S.), and a dispersion liquid of polytetrafluoroethylene resin particles was obtained.

To the obtained dispersion liquid of the polytetrafluoroethylene resin particles, 161 parts of the charge transporting compound represented by the above formula C-26, 5 parts of the guanamine compound represented by the following formula (J), 2.6 parts of 3,5-di-t-butyl-4-hydroxytoluene (BHT), 0.4 parts of dodecylbenzene sulfonic acid, 130 parts of cyclopentanone and 90 parts of cyclopentanol were added. After that, the resultant mixture was filtered through the polyflon filter (trade name: PF-040, manufactured by Advantec Toyo Kaisha, Ltd.), and the coating liquid was used for a protective layer of Example 1-25.

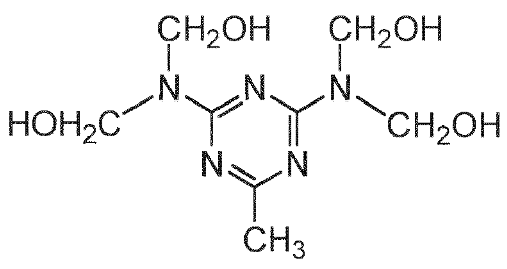

(J)

[Table 4]

Table 4

| | Number of graft copolymer | Mass of graft copolymer [parts] | Average size of primary particles of polytetrafluoroethylone particles [nm] | Average circularity of polytetrafluoroethylone particles | Content of 1,1,2,2-tetrafluoroethyl-2,2,2-trifluoroethyl ether in surface layer [ppm] |
|---|---|---|---|---|---|
| Example 1 - 1 | 1 | 2.20 | 210 | 0.85 | 5 |
| Example 1 - 2 | 1 | 2.20 | 183 | 0.87 | 5 |
| Example 1 - 3 | 1 | 2.20 | 247 | 0.80 | 5 |
| Example 1 - 4 | 1 | 2.20 | 142 | 0.85 | 4 |
| Example 1 - 5 | 1 | 2.20 | 352 | 0.79 | 5 |
| Example 1 - 6 | 1 | 1.60 | 352 | 0.79 | 3 |
| Example 1 - 7 | 1 | 3.20 | 352 | 0.79 | 5 |
| Example 1 - 8 | 1 | 4.40 | 352 | 0.79 | 5 |
| Example 1 - 9 | 1 | 0.40 | 352 | 0.79 | 5 |
| Example 1 - 10 | 2 | 0.40 | 352 | 0.79 | 5 |
| Example 1 - 11 | 3 | 0.40 | 352 | 0.79 | 5 |
| Example 1 - 12 | 4 | 0.40 | 352 | 0.79 | 5 |
| Example 1 - 13 | 5 | 0.40 | 352 | 0.79 | 5 |
| Example 1 - 14 | 6 | 0.40 | 352 | 0.79 | 5 |
| Example 1 - 15 | 7 | 0.40 | 352 | 0.79 | 5 |
| Example 1 - 16 | 8 | 0.40 | 352 | 0.79 | 5 |
| Example 1 - 17 | 9 | 0.40 | 352 | 0.79 | 5 |
| Example 1 - 18 | 10 | 0.40 | 352 | 0.79 | 5 |
| Example 1 - 19 | 11 | 0.40 | 352 | 0.79 | 5 |
| Example 1 - 20 | 12 | 0.40 | 352 | 0.79 | 3 |
| Example 1 - 21 | 13 | 0.40 | 352 | 0.79 | 4 |
| Example 1 - 22 | 14 | 0.40 | 352 | 0.79 | 4 |
| Example 1 - 23 | 15 | 0.40 | 352 | 0.79 | 5 |
| Example 1 - 24 | 16 | 0.40 | 352 | 0.79 | 5 |

(continued)

| | Number of graft copolymer | Mass of graft copolymer [parts] | Average size of primary particles of polytetrafluoroethyl one particles [nm] | Average circularity of polytetrafluoroethyl one particles | Content of 1,1,2,2-tetrafluoroethyl-2,2,2-trifluoroethyl ether in surface layer [ppm] |
|---|---|---|---|---|---|
| Example 1 - 25 | 1 | 2.20 | 210 | 0.85 | - |
| Example 1 - 26 | 17 | 2.20 | 210 | 0.85 | 5 |
| Example 1 - 27 | 18 | 2.20 | 210 | 0.85 | 5 |
| Comparative Example 1 - 1 | 19 | 2.20 | 210 | 0.85 | 5 |
| Comparative Example 1 - 2 | 20 | 2.20 | 210 | 0.85 | 4 |
| Comparative Example 1 - 3 | 21 | 2.20 | 210 | 0.85 | 5 |
| Comparative Example 1 - 4 | 22 | 2.20 | 210 | 0.85 | 4 |
| Comparative Example 1 - 5 | 23 | 2.20 | 210 | 0.85 | 5 |

<Evaluation of electrophotographic photosensitive member>

The electrophotographic photosensitive members obtained in the Examples 1-1 to 1-27 and Comparative Examples 1-1 to 1-5 were evaluated in the following way.

[Evaluation apparatus 1-1]

The electrophotographic photosensitive members produced in Examples 1-1 to 1-27 and Comparative Examples 1-1 to 1-5 were mounted on an image PRESS C800 (trade name), which was a copying machine manufactured by Canon Inc., and were evaluated.

Specifically, the above evaluation apparatus was installed in a high-temperature and high-humidity environment of a temperature of 30°C and a relative humidity of 80% RH; the produced electrophotographic photosensitive member was mounted in a process cartridge for a magenta color; the resultant process cartridge was mounted in a station for the process cartridge for magenta; and the electrophotographic photosensitive member was evaluated.

[Evaluation apparatus 1-2]

The electrophotographic photosensitive members produced in Examples 1-1 to 1-27 and Comparative Examples 1-1 to 1-5 were each mounted on a modified machine of an image PRESS C800 (trade name), which was a copying machine manufactured by Canon Inc., and were evaluated. The charging unit of the modified machine is a charging unit having a system of applying a voltage which is obtained by superimposing an AC voltage on a DC voltage to a roller type of a contact charging member (charging roller); and the exposure unit is an exposure unit of a laser image exposure system (wavelength of 680 nm).

Specifically, the above evaluation apparatus was installed in a high-temperature and high-humidity environment of a temperature of 30°C and a relative humidity of 80% RH; the produced electrophotographic photosensitive member was mounted in a process cartridge for a magenta color; the resultant process cartridge was mounted in a station for the process cartridge for magenta; and the electrophotographic photosensitive member was evaluated.

As for the charging conditions, a charging potential and an exposure amount of the exposure unit were adjusted so that the charging potential became -800 V and the exposure potential became -300 V.

For information, a surface potential of the electrophotographic photosensitive member was measured by taking

out a developing cartridge from the above evaluation apparatus, and inserting a potential measuring apparatus into the developing cartridge. The potential measuring apparatus is configured in such a way that a potential measuring probe (trade name: model 6000B-8, manufactured by TREK Japan) is arranged at a developing position of the developing cartridge. In addition, a position of the potential measuring probe with respect to the electrophotographic photosensitive member was set at the center of the electrophotographic photosensitive member in the generatrix direction and at such a position that the gap from the surface of the electrophotographic photosensitive member became 3 mm. Furthermore, the potential of the central portion of the electrophotographic photosensitive member was measured with the use of a surface electrometer (trade name: model 344, manufactured by TREK Japan).

(Evaluation of initial image)

The image was evaluated with the use of the above evaluation apparatus 1-1. With the use of A4-size gloss paper, a solid white image on the whole surface was output, and the number of image defects caused by a dispersion defect, specifically, black spots was visually evaluated, which were included in the area in the output image, which corresponded to one circumferential length of the electrophotographic photosensitive member. The number of black pots having a diameter of 0.3 mm or larger was evaluated. For information, the area corresponding to one circumferential length of the electrophotographic photosensitive member is a rectangular area having a length of 297 mm that is the long side length of the A4 sheet and a width of 96.1 mm that is one circumferential length of the electrophotographic photosensitive member. In the present disclosure, the smaller the number of the black spots, the better, and the effect of the present disclosure is obtained.
The evaluation results obtained in this way are shown in Table 5.

(Evaluation of potential fluctuation at the time of repeated use)

The potential fluctuation at the time of repeated use was evaluated with the use of the above evaluation apparatus 1-2. A cartridge equipped with an electrophotographic photosensitive member was attached to the evaluation apparatus, and the photosensitive member was repeatedly used by paper passing of 100000 sheets. In a station in which an electrophotographic photosensitive member was installed, a monochromatic character image with a print rate of 1% was repeatedly formed on 100000 sheets of plain paper having an A4 size. An initial potential of a dark portion at this time was compared with a dark portion potential after images of 100000 sheets have been repeatedly formed, and the difference was determined to be a value ($\Delta Vd$) of the potential fluctuation. In addition, an initial potential of a bright portion was compared with a bright portion potential after images of 100000 sheets have been repeatedly formed, and the difference was determined to be a value ($\Delta Vl$) of the potential fluctuation.
After the end of the paper passing of 100000 sheets, the apparatus was left to stand for 5 minutes, and the developing cartridge was replaced with the potential measuring apparatus; and a bright portion potential (Vlb) and a dark portion potential (Vdb) after repeated use were measured. The difference between the dark portion potential after repeated use and the initial dark portion potential (Vda) was determined to be a fluctuation amount of the dark potential ($\Delta Vd = |\Delta Vdb| - |\Delta Vda|$). In addition, the difference between the bright portion potential after repeated use and the initial bright portion potential (Vla) was determined to be a fluctuation amount of the bright portion potential ($\Delta Vl = |\Delta Vlb| - |\Delta Vla|$).
In the present disclosure, the smaller the change in the bright portion potential is, the better, and the effect of the present disclosure is obtained.
The evaluation results obtained in this way are shown in Table 5.
[Table 5]

Table 5

| Number of Examples | Evaluation results | |
|---|---|---|
| | Initial image | ΔVl [V] after paper passing of 100000 sheets |
| Example 1 - 1 | 0 | 13 |
| Example 1 - 2 | 0 | 13 |
| Example 1 - 3 | 0 | 13 |
| Example 1 - 4 | 1 | 15 |
| Example 1 - 5 | 0 | 17 |
| Example 1 - 6 | 0 | 17 |

(continued)

| Number of Examples | Evaluation results | |
|---|---|---|
| | Initial image | ΔVI [V] after paper passing of 100000 sheets |
| Example 1 - 7 | 0 | 17 |
| Example 1 - 8 | 2 | 19 |
| Example 1 - 9 | 1 | 17 |
| Example 1 - 10 | 2 | 17 |
| Example 1 - 11 | 1 | 17 |
| Example 1 - 12 | 1 | 17 |
| Example 1 - 13 | 1 | 20 |
| Example 1 - 14 | 0 | 23 |
| Example 1 - 15 | 3 | 17 |
| Example 1 - 16 | 4 | 17 |
| Example 1 - 17 | 3 | 17 |
| Example 1 - 18 | 3 | 17 |
| Example 1 - 19 | 5 | 17 |
| Example 1 - 20 | 5 | 17 |
| Example 1 - 21 | 5 | 17 |
| Example 1 - 22 | 5 | 17 |
| Example 1 - 23 | 4 | 22 |
| Example 1 - 24 | 4 | 26 |
| Example 1 - 25 | 0 | 15 |
| Example 1 - 26 | 0 | 13 |
| Example 1 - 27 | 0 | 13 |
| Example Comparative Example 1 - 1 | 0 | 32 |
| Example Comparative Example 1 - 2 | 0 | 33 |
| Example Comparative Example 1 - 3 | 8 | 15 |
| Example Comparative Example 1 - 4 | 7 | 32 |
| Example Comparative Example 1 - 5 | 7 | 16 |

[Example 2-1]

(Support 2)

A cylindrical aluminum cylinder (JIS-A3003, aluminum alloy, having outer diameter of 30 mm, length of 357.5 mm and thickness of 0.7 mm) was subjected to cutting work and the resultant cylinder was used as a support (electroconductive support). Ultrasonic cleaning in a cleaning liquid containing a detergent (trade name: Chemicol CT, produced by Tokiwa Chemical Industries Co., Ltd.) dissolved in pure water was performed, and then the cleaning liquid was washed away; and further ultrasonic cleaning in pure water was performed and degreasing treatment was performed, to obtain a support 2.

(Undercoat layer 2)

Sixty parts of a zinc oxide particle (average particle size: 70 nm, and specific surface area: 15 $m^2/g$) was mixed

with 500 parts of tetrahydrofuran while being stirred; and to this mixture, 0.75 parts of a silane coupling agent (compound name: N-2-(aminoethyl)-3-aminopropyltrimethoxy silane, and trade name: KBM603, produced by Shin-Etsu Chemical Co., Ltd.) was added, and the mixture was stirred for 2 hours. After that, tetrahydrofuran was distilled off under reduced pressure, and the resultant was heated and dried at 120°C for 3 hours; and a surface-treated zinc oxide particle was obtained.

Subsequently, 25 parts of butyral (trade name: BM-1, produced by Sekisui Chemical Co., Ltd.) as a polyol, and 22.5 parts of a blocked isocyanate (trade name: Sumidule BL- 3173, produced by Sumika Covestro Urethane Co., Ltd.) were dissolved in 142 parts of methyl ethyl ketone. To this solution, 100 parts of the surface-treated zinc oxide particle and 1 part of anthraquinone were added, and the resultant was dispersed in a sand mill with the use of glass beads having a diameter of 1 mm for 5 hours.

After the dispersion treatment, 0.008 parts of dioctyl tin dilaurate and 6.5 parts of a silicone resin particle (Tospearl 145, produced by GE Toshiba Silicone Co., Ltd.) were added to the above mixture, and the resultant mixture was stirred; and a coating liquid for an undercoat layer was prepared.

The support was dip-coated with the obtained coating liquid for the undercoat layer to have a coating film formed thereon, the coating film was dried at 190°C for 24 minutes, and an undercoat layer 2 was formed which had a film thickness of 15 μm.

(Charge generation layer 2)

Next, 15 parts of a chlorogallium phthalocyanine crystal having strong diffraction peaks at least at 7.4°, 16.6°, 25.5° and 28.3° at a Bragg angle ($2\theta \pm 0.2°$) in CuKα characteristic X-rays, 10 parts of a vinyl chloride-vinyl acetate copolymer resin (VMCH, produced by Nippon Union Carbide), and 300 parts of n-butyl alcohol are mixed; and the mixture was subjected to dispersion treatment in a sand mill which used glass beads having a diameter of 1 mm, for 4 hours; and a coating liquid for a charge generation layer was prepared.

The undercoat layer was dip-coated with the coating liquid for the charge generation layer, and the obtained coating film was dried at 150°C for 5 minutes; and thereby, a charge generation layer 2 was formed which had a film thickness of 0.2 μm.

(Charge transport layer 2)

Next, 20 parts of a polytetrafluoroethylene resin particle (average size of primary particles of 210 nm, and average circularity of 0.85), 2.20 parts of the previously described graft copolymer 1 and 24 parts of tetrahydrofuran were mixed while the mixture was stirred and the liquid temperature was kept at 20°C, for 48 hours, and a preparation liquid A was obtained.

Next, 53.2 parts of N,N'-bis(3-methylphenyl)-N,N'-diphenylbenzidine, 14.1 parts of a bisphenol Z type polycarbonate resin (viscosity average molecular weight of 40,000) and 0.26 parts of 2,6-di-t-butyl-4-methylphenol serving as an antioxidant were mixed, and the mixture was mixed with and dissolved into 250 parts of tetrahydrofuran; and a preparation liquid B was obtained.

The preparation liquid A was added to the preparation liquid B, and the mixture was stirred and mixed, and was passed through a high-pressure dispersing machine (trade name: Microfluidizer M-110EH, manufactured by Microfluidics Co., Ltd. U.S.); and a dispersion liquid was obtained.

After that, a coating liquid for the charge transport layer was prepared by adding a fluorine-modified silicone oil (trade name: FL-100 Shin-Etsu Chemical Co., Ltd.) to the dispersion liquid so that the concentration was 5 ppm, and filtering the mixture through the polyflon filter (trade name: PF-040, manufactured by Advantec Toyo Kaisha, Ltd.).

The charge generation layer was dip-coated with this coating liquid for the charge transport layer to have a coating film formed thereon, and the obtained coating film was dried at 150°C for 25 minutes; and a charge transport layer 2 was formed which had a film thickness of 33 μm.

Thus, an electrophotographic photosensitive member was produced in which the charge transport layer was the surface layer.

[Examples 2-2 to 2-5]

An electrophotographic photosensitive member was produced in the same way as in Example 2-1, except that when the charge transport layer 2 was formed, the average size of primary particles and average circularity of the polytetrafluoroethylene particle were changed as shown in Table 6.

[Examples 2-6 to 2-9]

An electrophotographic photosensitive member was produced in the same way as in Example 2-1, except that when the charge transport layer 2 was formed, the parts by mass of the graft copolymer 1 were changed as shown in Table 6.

[Examples 2-10 to 2-26 and Comparative Examples 2-1 to 2-5.]

An electrophotographic photosensitive member was produced in the same way as in Example 2-1, except that when the charge transport layer 2 was formed, the graft copolymer 1 was changed to the graft copolymer shown in Table 6.
[Table 6]

Table 6

| | Number of graft copolymer | Mass of graft copolymer [parts] | Average size of primary particles of polytetrafluoroethylene particles [nm] | Average circularity of polytetrafluoroethylene particles |
|---|---|---|---|---|
| Example 2-1 | 1 | 1.10 | 210 | 0.85 |
| Example 2 - 2 | 1 | 1.10 | 183 | 0.87 |
| Example 2 - 3 | 1 | 1.10 | 247 | 0.80 |
| Example 2 - 4 | 1 | 1.10 | 142 | 0.85 |
| Example 2 - 5 | 1 | 1.10 | 352 | 0.79 |
| Example 2 - 6 | 1 | 0.80 | 352 | 0.79 |
| Example 2 - 7 | 1 | 1.60 | 352 | 0.79 |
| Example 2 - 8 | 1 | 2.20 | 352 | 0.79 |
| Example 2 - 9 | 1 | 0.20 | 352 | 0.79 |
| Example 2 - 10 | 2 | 0.20 | 352 | 0.79 |
| Example 2 - 11 | 3 | 0.20 | 352 | 0.79 |
| Example 2 - 12 | 4 | 0.20 | 352 | 0.79 |
| Example 2 - 13 | 5 | 0.20 | 352 | 0.79 |
| Example 2 - 14 | 6 | 0.20 | 352 | 0.79 |
| Example 2 - 15 | 7 | 0.20 | 352 | 0.79 |
| Example 2 - 16 | 8 | 0.20 | 352 | 0.79 |
| Example 2 - 17 | 9 | 0.20 | 352 | 0.79 |
| Example 2 - 18 | 10 | 0.20 | 352 | 0.79 |
| Example 2 - 19 | 11 | 0.20 | 352 | 0.79 |
| Example 2 - 20 | 12 | 0.20 | 352 | 0.79 |

(continued)

| | Number of graft copolymer | Mass of graft copolymer [parts] | Average size of primary particles of polytetrafluoroethylene particles [nm] | Average circularity of polytetrafluoroethylene particles |
|---|---|---|---|---|
| Example 2 - 21 | 13 | 0.20 | 352 | 0.79 |
| Example 2 - 22 | 14 | 0.20 | 352 | 0.79 |
| Example 2 - 23 | 15 | 0.20 | 352 | 0.79 |
| Example 2 - 24 | 16 | 0.20 | 352 | 0.79 |
| Example 2 - 25 | 17 | 1.10 | 210 | 0.85 |
| Example 2 - 26 | 18 | 1.10 | 210 | 0.85 |
| Comparative Example 2 - 1 | 19 | 1.10 | 210 | 0.85 |
| Comparative Example 2 - 2 | 20 | 1.10 | 210 | 0.85 |
| Comparative Example 2 - 3 | 21 | 1.10 | 210 | 0.85 |
| Comparative Example 2 - 4 | 22 | 1.10 | 210 | 0.85 |
| Comparative Example 2 - 5 | 23 | 1.10 | 210 | 0.85 |

<Evaluation of electrophotographic photosensitive member>

The electrophotographic photosensitive members obtained in the Examples 2-1 to 2-26 and Comparative Examples 2-1 to 2-5 were evaluated in the following way.

[Evaluation apparatus 2-1]

The electrophotographic photosensitive members produced in Examples 2-1 to 2-26 and Comparative Examples 2-1 to 2-5 were mounted on an image RUNNER ADVANCE DX C3835F (trade name), which was a copying machine manufactured by Canon Inc., and were evaluated.

Specifically, the above evaluation apparatus was installed in a high-temperature and high-humidity environment of a temperature of 30°C and a relative humidity of 80% RH; the produced electrophotographic photosensitive member was mounted in a process cartridge for a magenta color; the resultant process cartridge was mounted in a station for the process cartridge for magenta; and the electrophotographic photosensitive member was evaluated.

[Evaluation apparatus 2-2]

The electrophotographic photosensitive members produced in Examples 2-1 to 2-26 and Comparative Examples 2-1 to 2-5 were mounted on a modified machine (of which the charging unit had a system of applying a DC voltage to a roller type of a contact charging member (charging roller), and the exposure unit had a laser image exposure system (wavelength of 780 nm)) of an image RUNNER ADVANCE DX C3835F (trade name), which was a copying machine manufactured by Canon Inc., and were evaluated. Specifically, the above evaluation apparatus was installed in a high-temperature and high-humidity environment of a temperature of 30°C and a relative humidity of 80% RH; the produced electrophotographic photosensitive member was mounted in a process cartridge for a magenta color; the resultant

process cartridge was mounted in a station for the process cartridge for magenta; and the electrophotographic photosensitive member was evaluated.

For information, a surface potential of the electrophotographic photosensitive member was measured by taking out a developing cartridge from the above evaluation apparatus, and inserting a potential measuring apparatus into the developing cartridge. The potential measuring apparatus was configured in such a way that a potential measuring probe (trade name: model 6000B-8, manufactured by TREK Japan) was arranged at a developing position of the developing cartridge; and a position of the potential measuring probe with respect to the electrophotographic photosensitive member was set at the center of the electrophotographic photosensitive member in the generatrix direction and at such a position that the gap from the surface of the electrophotographic photosensitive member became 3 mm. Furthermore, the potential of the central portion of the electrophotographic photosensitive member was measured with the use of a surface electrometer (trade name: model 344, manufactured by TREK Japan).

(Evaluation of initial image)

The image was evaluated with the use of the above evaluation apparatus 2-1. With the use of A4-size gloss paper, a solid white image on the whole surface was output, and the number of image defects caused by a dispersion defect, specifically, black spots was visually evaluated, which were included in the area in the output image, which corresponded to one circumferential length of the electrophotographic photosensitive member. The number of black pots having a diameter of 0.3 mm or larger was evaluated. For information, the area corresponding to one circumferential length of the electrophotographic photosensitive member is a rectangular area having a length of 297 mm that is the long side length of the A4 sheet and a width of 96.1 mm that is one circumferential length of the electrophotographic photosensitive member. In the present disclosure, the smaller the number of the black spots, the better, and the effect of the present disclosure is obtained.

The evaluation results obtained in this way are shown in Table 7.

(Evaluation of potential fluctuation at the time of repeated use)

The potential fluctuation at the time of repeated use was evaluated with the use of the above evaluation apparatus 2-2. A cartridge equipped with an electrophotographic photosensitive member was attached to the evaluation apparatus, and the photosensitive member was repeatedly used by paper passing of 50000 sheets. In a station in which an electrophotographic photosensitive member was installed, a monochromatic character image with a print rate of 1% was repeatedly formed on 50000 sheets of plain paper having an A4 size. An initial potential of a dark portion at this time was compared with a dark portion potential after images of 50000 sheets have been repeatedly formed, and the difference was determined to be a value ($\Delta Vd$) of the potential fluctuation. In addition, an initial potential of a bright portion was compared with a bright portion potential after images of 50000 sheets have been repeatedly formed, and the difference was determined to be a value ($\Delta Vl$) of the potential fluctuation. After the end of the paper passing of 50000 sheets, the apparatus was left to stand for 5 minutes, and the developing cartridge was replaced with the potential measuring apparatus; and a bright portion potential (Vlb) and a dark portion potential (Vdb) after repeated use were measured. The difference between the dark portion potential after repeated use and the initial dark portion potential (Vda) was determined to be a fluctuation amount of the dark potential ($\Delta Vd = |\Delta Vdb| - |\Delta Vda|$). In addition, the difference between the bright portion potential after repeated use and the initial bright portion potential (Vla) was determined to be a fluctuation amount of the bright portion potential ($\Delta Vl = |\Delta Vlb| - |\Delta Vla|$).

In the present disclosure, the smaller the change in the bright portion potential, the better, and the effect of the present disclosure is obtained.

The evaluation results obtained in this way are shown in Table 7.

[Table 7]

Table 7

| Number of Examples | Evaluation results | |
|---|---|---|
| | Initial image | ΔVl [V] after paper passing of 50000 sheets |
| Example 2 - 1 | 0 | 13 |
| Example 2 - 2 | 0 | 13 |
| Example 2 - 3 | 0 | 13 |
| Example 2 - 4 | 1 | 15 |

(continued)

| Number of Examples | Evaluation results | |
|---|---|---|
| | Initial image | ΔVI [V] after paper passing of 50000 sheets |
| Example 2 - 5 | 0 | 17 |
| Example 2 - 6 | 0 | 17 |
| Example 2 - 7 | 0 | 17 |
| Example 2 - 8 | 2 | 19 |
| Example 2 - 9 | 1 | 17 |
| Example 2 - 10 | 2 | 17 |
| Example 2 - 11 | 1 | 17 |
| Example 2 - 12 | 1 | 17 |
| Example 2 - 13 | 1 | 20 |
| Example 2 - 14 | 0 | 23 |
| Example 2 - 15 | 3 | 17 |
| Example 2 - 16 | 4 | 17 |
| Example 2 - 17 | 3 | 17 |
| Example 2 - 18 | 3 | 17 |
| Example 2 - 19 | 5 | 17 |
| Example 2 - 20 | 5 | 17 |
| Example 2 - 21 | 5 | 17 |
| Example 2 - 22 | 5 | 17 |
| Example 2 - 23 | 4 | 22 |
| Example 2 - 24 | 4 | 26 |
| Example 2 - 25 | 0 | 13 |
| Example 2 - 26 | 0 | 13 |
| Comparative Example 2 - 1 | 0 | 32 |
| Comparative Example 2 - 2 | 0 | 33 |
| Comparative Example 2 - 3 | 8 | 15 |
| Comparative Example 2 - 4 | 7 | 32 |
| Comparative Example 2 - 5 | 2 | 34 |

According to one aspect of the present disclosure, an electrophotographic photosensitive member can be provided which is excellent in dispersibility of a fluorine atom-containing resin particle in the surface layer and suppresses a potential fluctuation at the time of repeated use in a high-temperature and high-humidity environment.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present disclosure provides an electrophotographic photosensitive member having a surface layer that is excellent in dispersibility of a fluorine atom-containing resin particle and suppresses a potential fluctuation at the time of repeated use. The electrophotographic photosensitive member having the surface layer, wherein the surface layer includes the fluorine atom-containing resin particle, a binder material, and a polymer A having a specific structural unit.

## Claims

1. An electrophotographic photosensitive member having a surface layer, wherein the surface layer comprises:

   a fluorine atom-containing resin particle;
   a binder material; and
   a polymer A having a structural unit represented by the following formula (1),

   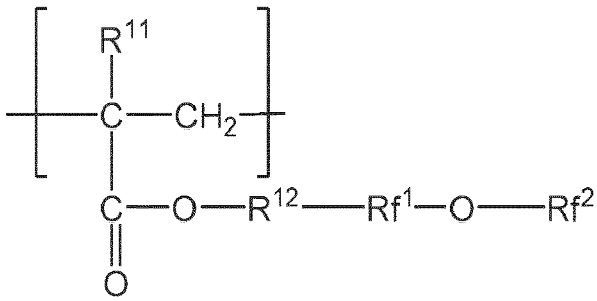

   (1)

   , wherein

   $R^{11}$ represents a hydrogen atom or a methyl group;
   $R^{12}$ represents a single bond, a methylene group or an ethylene group;
   $Rf^1$ represents a perfluoroalkylene group having 1 to 5 carbon atoms or a perfluoroalkylidene group having 1 to 5 carbon atoms;
   $Rf^2$ represents a perfluoroalkyl group having 1 to 5 carbon atoms; and
   a sum of the number of carbon atoms of $Rf^1$ and $Rf^2$ is 6 or more.

2. The electrophotographic photosensitive member according to claim 1, wherein the polymer A is free of a structural unit having an acidic group having a pKa of 3 or smaller.

3. An electrophotographic photosensitive member having a surface layer, wherein the surface layer comprises:

   a fluorine atom-containing resin particle;
   a binder material; and
   a polymer A having a structural unit represented by the following formula (1), wherein
   the polymer A is free of a structural unit having an acidic group having a pKa of 3 or smaller,

   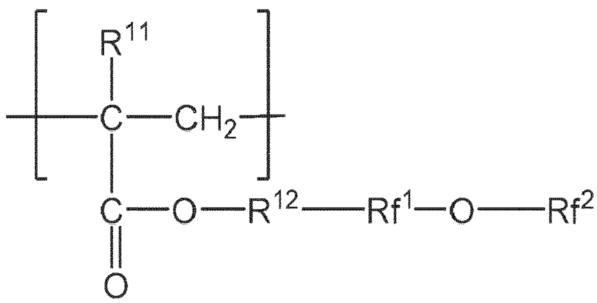

   (1)

   , wherein

   $R^{11}$ represents a hydrogen atom or a methyl group;
   $R^{12}$ represents a single bond, a methylene group or an ethylene group;
   $Rf^1$ represents a perfluoroalkylene group having 1 to 5 carbon atoms or a perfluoroalkylidene group having 1 to 5 carbon atoms; and
   $Rf^2$ represents a perfluoroalkyl group having 1 to 5 carbon atoms.

4. The electrophotographic photosensitive member according to any one of claims 1 to 3, wherein the sum of the number of carbon atoms of $Rf^1$ and $Rf^2$ in the formula (1) is 6 or more and 9 or less.

5. The electrophotographic photosensitive member according to any one of claims 1 to 4, wherein a weight average molecular weight of the polymer A is 16,000 or more and 100,000 or less.

6. The electrophotographic photosensitive member according to any one of claims 1 to 5, wherein a content of the polymer A in the surface layer is 2% by mass or more and 10% by mass or less, with respect to a content of the fluorine atom-containing resin particle in the surface layer.

7. The electrophotographic photosensitive member according to any one of claims 1 to 6, wherein a content of the fluorine atom-containing resin particle in the surface layer is 5% by mass or more and 40% by mass or less, with respect to a total mass of the surface layer.

8. The electrophotographic photosensitive member according to any one of claims 1 to 7, wherein the polymer A further contains a structural unit represented by the following formula (2):

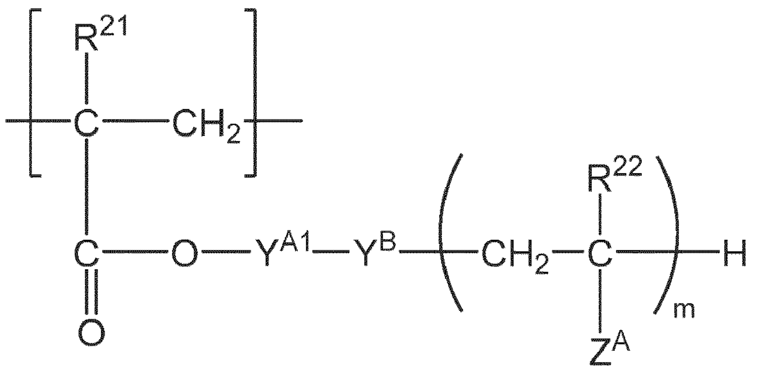

(2)

, wherein

$Y^{A1}$ represents an unsubstituted alkylene group:
$Y^B$ represents an unsubstituted alkylene group, an alkylene group substituted with a halogen atom, an alkylene group substituted with a hydroxy group, an ester bond (-COO-), an amide bond (-NHCO-) or a urethane bond (-NHCOO-), or alternatively a divalent linking group that can be derived from a combination of one or more selected from the above groups and bonds, and -O- or -S-, or alternatively a single bond;
$Z^A$ represents a structure represented by the following formula (2A), a cyano group or a phenyl group;
$R^{21}$ and $R^{22}$ represent a hydrogen atom or a methyl group; and
m represents an integer of 25 or larger and 150 or smaller,

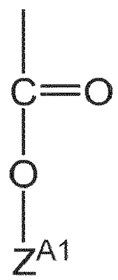

(2A)

, wherein $Z^{A1}$ represents an alkyl group having 1 to 4 carbon atoms.

9. The electrophotographic photosensitive member according to claim 8, wherein the polymer A has only the structural unit represented by the formula (1) and the structural unit represented by the formula (2), as structural units.

10. The electrophotographic photosensitive member according to any one of claims 1 to 9, wherein the fluorine atom-containing resin particle is a polytetrafluoroethylene resin particle.

**11.** The electrophotographic photosensitive member according to any one of claims 1 to 10, wherein an arithmetic average of long diameters of primary particles in the fluorine atom-containing resin particles is 150 nm or larger and 300 nm or smaller.

**12.** The electrophotographic photosensitive member according to any one of claims 1 to 11, wherein the binder material is a cured product of a hole transporting compound having a polymerizable functional group.

**13.** The electrophotographic photosensitive member according to claim 12, wherein the hole transporting compound having a polymerizable functional group is a compound represented by the following formula (CT-1) or (CT-2):

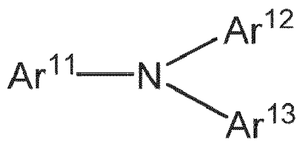
(CT-1)

wherein $Ar^{11}$ to $Ar^{13}$ each independently represent a substituted aryl group or an unsubstituted aryl group; and the substituent of the substituted aryl group is an alkyl group having 1 to 6 carbon atoms or a monovalent functional group represented by any one of the following formulae (P-1) to (P-3), provided that the compound represented by the formula (CT-1) has at least one monovalent functional group represented by any one of the following formulae (P-1) to (P-3);

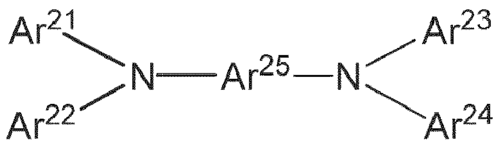
(CT-2)

, wherein $Ar^{21}$ to $Ar^{24}$ each independently represent a substituted aryl group or an unsubstituted aryl group, and $Ar^{25}$ represents a substituted arylene group or an unsubstituted arylene group; the substituent of the substituted aryl group is an alkyl group having 1 to 6 carbon atoms or a monovalent functional group represented by the following formulae (P-1) to (P-3); the substituent of the substituted arylene group is an alkyl group having 1 to 6 carbon atoms or a monovalent functional group represented by the following formulae (P-1) to (P-3), provided that the compound represented by the formula (CT-2) has at least one monovalent functional group represented by any one of the following formulae (P-1) to (P-3):

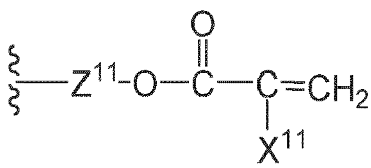
(P-1)

, wherein $Z^{11}$ represents a single bond or an alkylene group having 1 to 6 carbon atoms, and $X^{11}$ represents a hydrogen atom or a methyl group;

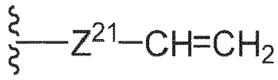
(P-2)

, wherein $Z^{21}$ represents a single bond or an alkylene group having 1 to 6 carbon atoms; and

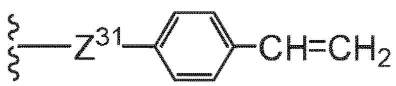
(P-3)

, wherein $Z^{31}$ represents a single bond or an alkylene group having 1 to 6 carbon atoms.

**14.** The electrophotographic photosensitive member according to claim 12 or 13, wherein a content of the fluorine atom-containing resin particle in the surface layer is 20% by mass or more and 40% by mass or less, with respect to a total mass of the surface layer.

**15.** The electrophotographic photosensitive member according to any one of claims 1 to 14, wherein the binder material comprises:

a cured product of a charge transporting compound, and
at least one triazine compound selected from the group consisting of a guanamine compound and a melamine compound.

**16.** The electrophotographic photosensitive member according to claim 15, wherein the charge transporting compound has at least one polymerizable functional group selected from a methylol group and a methoxy group.

**17.** The electrophotographic photosensitive member according to claim 15 or 16, wherein a content of the fluorine atom-containing resin particle in the surface layer is 5% by mass or more and 15% by mass or less, with respect to a total mass of the surface layer.

**18.** The electrophotographic photosensitive member according to any one of claims 1 to 17, wherein the binder material includes a thermoplastic resin;

the surface layer further contains a charge transport substance; and
the thermoplastic resin is at least one resin selected from a polycarbonate resin and a polyarylate resin.

**19.** The electrophotographic photosensitive member according to claim 18, wherein the charge transport substance is at least one selected from the group consisting of a compound represented by the following formula (3) and a compound represented by the following formula (4);

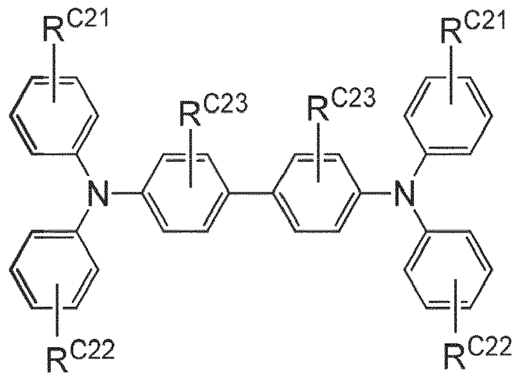

(3)

, wherein $R^{C21}$, $R^{C22}$ and $R^{C23}$ each independently represent a hydrogen atom, a halogen atom, an alkyl group having 1 to 10 carbon atoms, an alkoxy group having 1 to 10 carbon atoms, or an aryl group having 6 to 10 carbon atoms; and

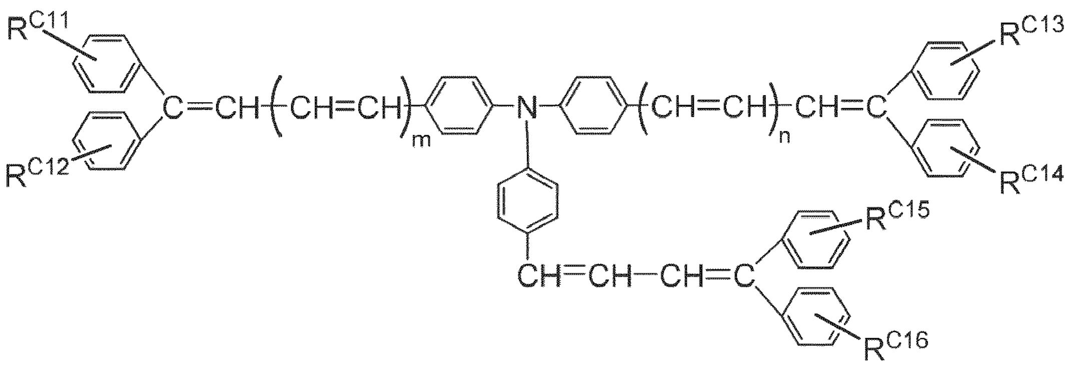

(4)

, wherein $R^{C11}$, $R^{C12}$, $R^{C13}$, $R^{C14}$, $R^{C15}$ and $R^{C16}$ each independently represent a hydrogen atom, a halogen atom, an alkyl group having 1 to 20 carbon atoms, an alkoxy group having 1 to 20 carbon atoms, or an aryl group having 6 to 30 carbon atoms, in any of which two adjacent substituents may be bonded to each other to form a hydrocarbon ring structure; and m and n are each independently 0, 1 or 2.

**20.** The electrophotographic photosensitive member according to claim 18 or 19, wherein a content of the fluorine atom-containing resin particle in the surface layer is 5% by mass or more and 15% by mass or less, with respect to a total mass of the surface layer.

**21.** A process cartridge that integrally supports an electrophotographic photosensitive member according to any one of claims 1 to 20, and at least one unit selected from the group consisting of a charging unit, a developing unit, a transfer unit, a static elimination unit and a cleaning unit, and that is detachably attachable to a main body of an electrophotographic apparatus.

**22.** An electrophotographic apparatus comprising: an electrophotographic photosensitive member according to any one of claims 1 to 20, a charging unit, an exposure unit, a developing unit and a transfer unit.

**23.** A method for producing an electrophotographic photosensitive member having a surface layer, comprising:

a step of preparing a coating liquid for the surface layer, the coating liquid containing a polymer A having a structural unit represented by the following formula (1), a fluorine atom-containing resin particle, and at least one selected from a binder material and a raw material of the binder material; and
a step of forming a coating film of the coating liquid for the surface layer, and drying and/or curing the coating film to thereby form the surface layer:

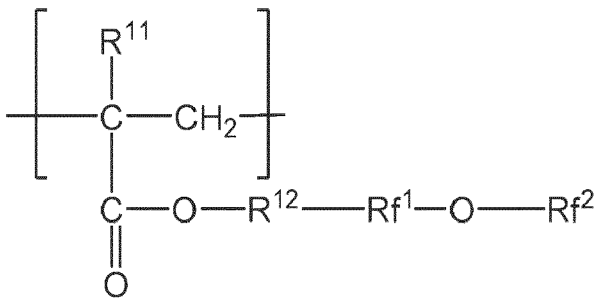

(1)

, wherein

$R^{11}$ represents a hydrogen atom or a methyl group;
$R^{12}$ represents a single bond, a methylene group or an ethylene group;
$Rf^1$ represents a perfluoroalkylene group having 1 to 5 carbon atoms or a perfluoroalkylidene group having 1 to 5 carbon atoms; and
$Rf^2$ represents a perfluoroalkyl group having 1 to 5 carbon atoms.

FIG. 1

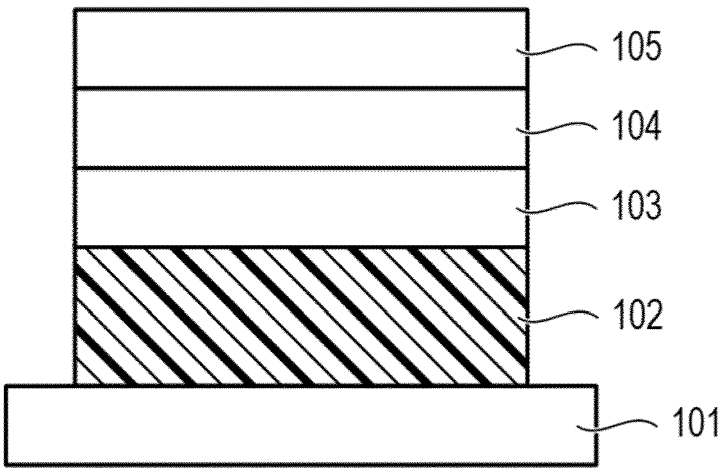

FIG. 2

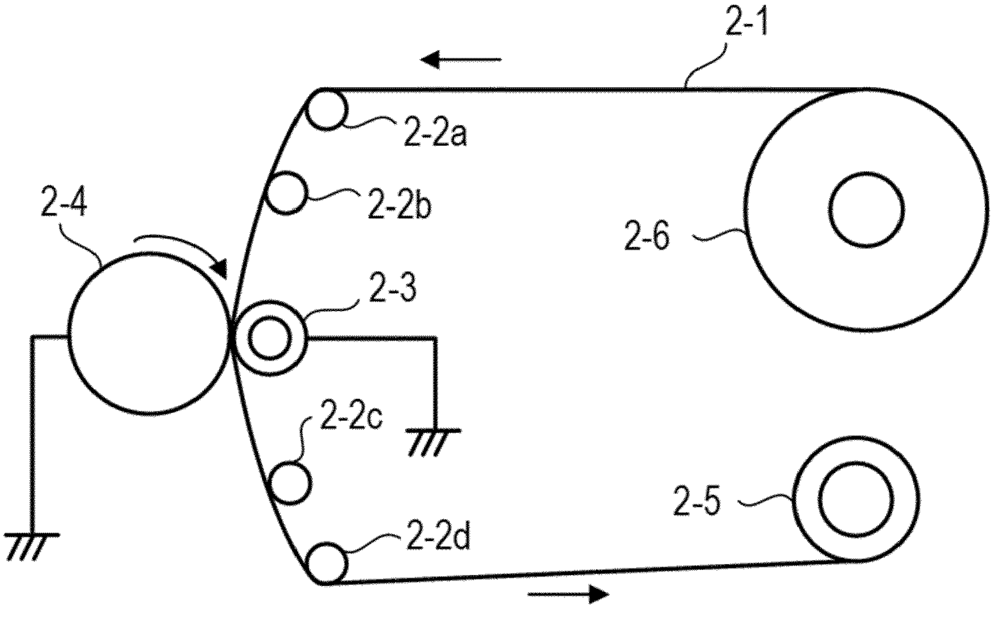

FIG. 3

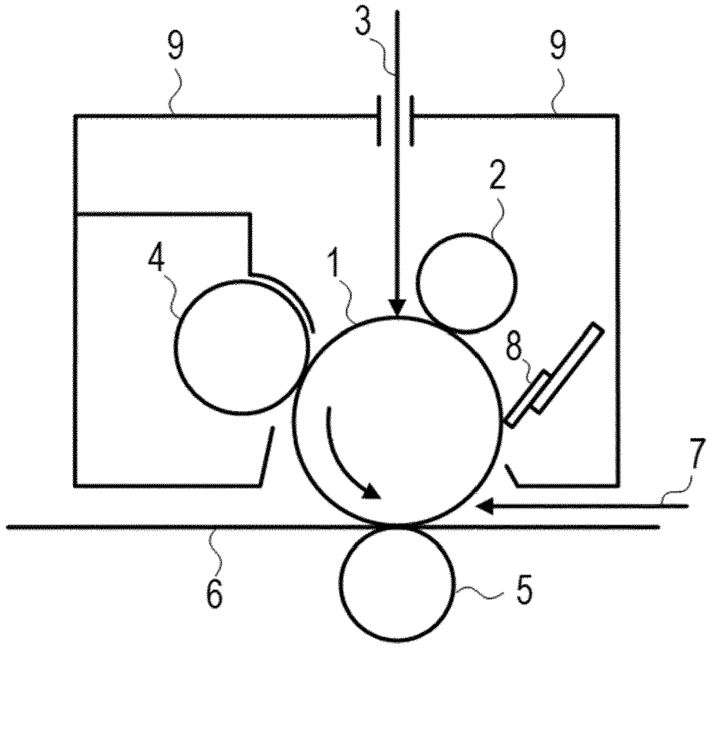

FIG. 4

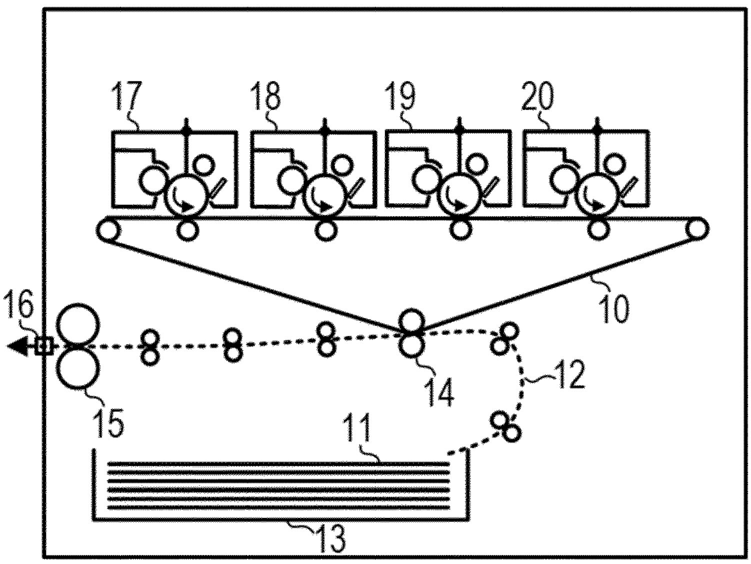

Europäisches Patentamt
European Patent Office
Office européen des brevets

# EUROPEAN SEARCH REPORT

Application Number
EP 23 15 4688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/233322 A1 (CHODA TAKAHIRO [JP] ET AL) 23 July 2020 (2020-07-23)<br>* paragraph [0097]; examples 3,18 *<br>* paragraphs [0258], [0259], [0260], [0373] - [0408] *<br>----- | 1-11, 18-23 | INV.<br>G03G5/05<br>G03G5/06<br>G03G5/147 |
| A | US 2021/080843 A1 (SASAKI TOMOYA [JP] ET AL) 18 March 2021 (2021-03-18)<br>* examples 1-25,1-26; table 2 *<br>* claims 1,17,18 *<br>----- | 1-23 | |
| A | US 2020/257212 A1 (IWASAKI MASAHIRO [JP] ET AL) 13 August 2020 (2020-08-13)<br>* paragraph [0133]; examples FA,FB *<br>----- | 1-23 | |

TECHNICAL FIELDS SEARCHED (IPC)

G03G

The present search report has been drawn up for all claims

1

| Place of search | Date of completion of the search | Examiner |
|---|---|---|
| The Hague | 16 May 2023 | Vogt, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 15 4688

This annex lists the patent family members relating to the patent documents cited in the above-mentioned European search report. The members are as contained in the European Patent Office EDP file on
The European Patent Office is in no way liable for these particulars which are merely given for the purpose of information.

16-05-2023

| Patent document cited in search report | Publication date | Patent family member(s) | Publication date |
|---|---|---|---|
| US 2020233322 A1 | 23-07-2020 | CN 111183398 A | 19-05-2020 |
| | | JP 7230818 B2 | 01-03-2023 |
| | | JP WO2019070003 A1 | 22-10-2020 |
| | | US 2020233322 A1 | 23-07-2020 |
| | | WO 2019070003 A1 | 11-04-2019 |
| US 2021080843 A1 | 18-03-2021 | CN 112526836 A | 19-03-2021 |
| | | JP 2021047236 A | 25-03-2021 |
| | | US 2021080843 A1 | 18-03-2021 |
| US 2020257212 A1 | 13-08-2020 | CN 111552153 A | 18-08-2020 |
| | | JP 2020129057 A | 27-08-2020 |
| | | US 2020257212 A1 | 13-08-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06332219 A
- JP 2009104145 A
- JP 2012203253 A
- JP 2021047236 A
- JP 2009 A
- JP 104145 A